# EUROPEAN PATENT APPLICATION

(11) **EP 4 521 565 A1**
(43) Date of publication of application: **12.03.2025**
(21) Application number: 23799694.7
(22) Date of filing: 04.05.2023
(51) Int. Cl.: H01R 24/38, H01Q 1/24, H01R 13/719, H01R 13/646, H01Q 3/08, H01R 24/60, H01R 13/621, H01R 107/00

(54) **SMALL CELL BASE STATION ANTENNA APPARATUS AND CONNECTOR FOR SAME**

(30) Priority: 04.05.2022 KR 20220055546; 16.05.2022 KR 20220059648; 03.05.2023 KR 20230058003
(71) Applicant: KMW Inc., Hwaseong-si, Gyeonggi-do 18462 (KR)
(72) Inventor: KIM, Duk Yong, Yongin-si Gyeonggi-do 17086 (KR); JEONG, Bae Mook, Suwon-si Gyeonggi-do 16545 (KR); JI, Kyo Sung, Hwaseong-si Gyeonggi-do 18484 (KR); RYU, Chi Back, Hwaseong-si Gyeonggi-do 18392 (KR); PARK, Won Jun, Yongin-si Gyeonggi-do 17134 (KR)
(74) Representative: Impuls legal PartG mbB
(86) International application number: PCT/KR2023/006085
(87) International publication number: WO 2023/214813

(57) **Abstract**

Disclosed herein are a small cell base station antenna apparatus and a connector for same. The small cell base station antenna apparatus comprises: a radio Unit (RU); at least one antenna module installed to be tiltable and steerable with respect to the radio unit; and a multifunction link configured to mediate the installation of each antenna module to the radio unit, wherein the multifunction link comprises: a center body; a first fixture connected between one end of the center body and the antenna module; and a second fixture connected between the other end of the center body and the radio unit, and wherein the first fixture and the second fixture are coupled via a ball joint to enable the antenna module to be installed to perform tilting rotation and steering rotation motions with respect to the radio unit.

## Description

### [Technical Field]

The present disclosure relates to a small cell base station antenna apparatus and a connector for same, and more particularly, to a small cell base station antenna apparatus that is capable of preventing external exposure of cables, of facilitating establishment of indoor small cells, and of realizing beamforming to enable dual-band implementation by dividing a portion of one antenna module to cover different frequency bands or by providing a plurality of antenna modules to cover respective different frequency bands, and a connector for same.

### [Background Art]

In order to meet the growing demand for wireless data traffic since the commercialization of 4G communication systems, efforts are being made to develop improved 5G communication systems or pre-5G communication systems. For this reason, the 5G communication systems or pre-5G communication systems are called beyond 4G network communication systems or post LTE communication systems. In order to achieve high data rates, the 5G communication systems are considered for implementation in ultra-high frequency (mmWave) bands (e.g., 60 gigahertz (60 GHz) bands). In order to mitigate the path loss of radio waves and increase the distance of transmission of radio waves in ultra-high frequency bands, beamforming, massive MIMO, fulldimensional MIMO (FD-MIMO), array antenna, analog beamforming, and large scale antenna technologies are discussed in the 5G communication systems.

In particular, various technologies for enhancing frequency efficiency are applicable in future 5G cellular networks that require much higher capacity than the current one. One of several technology candidates, small cell network (SCN) technology, may miniaturize cell size to enhance channel utilities, increase cell density to improve frequency efficiency, and increase capacity.

Unlike an existing macro cell that has wide coverage with high transmission power, a small cell is a small base station that has narrow coverage with low transmission power. The category of the small cell collectively refers to low-power base station equipment of 10W or less, pico cells, femto cells, Wi-Fi, etc. The advantage of the small cell is that it is able to cost less to establishment and to be smaller in size to enhance space efficiency, compared to the macro cell.

Overlapping such small cells in public places, densely populated areas, or indoor spaces such as large shopping malls or airport buildings may increase capacity per unit area. This also has an advantage of reducing the power consumption and installation costs of one macro cell base station. It is expected that this small cell will be foundation technology that connects 4G and 5G, as small cell base stations alone may achieve 1,000 times the capacity of existing LTE.

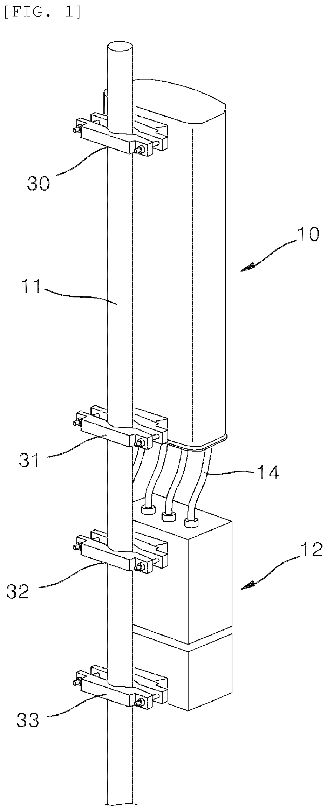

FIG. 1 is a perspective view illustrating an external appearance of a base station antenna apparatus according to the prior art.

As illustrated in FIG. 1, the base station antenna apparatus according to the prior art is installed outdoors (outside) and structured such that an antenna module 10 is mounted to an upright support pole 11 by fixing brackets 30 and 31, a radio unit 12 is mounted beneath the antenna module 10 by fixing brackets 32 and 33, and the antenna module 10 is electrically connected to the radio unit 12 using a plurality of cables 14. The fixing brackets 30 and 31 are placed at the respective upper and lower ends of the antenna module 10 to fix the antenna module 10 to the support pole 11, and the fixing brackets 32 and 33 are placed at the respective upper and lower ends of the radio unit 12 to fix the radio unit 12 to the support pole 11. The fixing brackets 30 to 33 serve to fix the components using fasteners such as screws, bolts, or nuts.

However, the conventional base station antenna apparatus may have a limited structure that should necessarily be installed outdoors (outside) via the support pole 11, and may have a poor aesthetic appearance due to the external exposure of the cables 14 as it is structured such that the antenna module 10 is mounted on the relatively upper side of the support pole 11, the radio unit 12, e.g., a remote radio head (RRH), is mounted on the relatively lower side of the support pole 11, and they are then interconnected using the cables 14.

If a small cell base station is installed indoors in this way, the complex connection of cables between a remote radio head (RRH) and an antenna module may cause a poor aesthetic appearance, and it may be realistically difficult to cover dual-band frequency ranges because only one antenna module is provided for each remote radio head (RRH).

### [DISCLOSURE]

### [Technical Problem]

The present disclosure has been made in view of the above-mentioned problems, and an object thereof is to provide a small cell base station antenna apparatus that is capable of facilitating establishment of small cell base stations in public places, densely populated areas, or places such as large shopping malls or airport buildings, and a connector for same.

Another object of the present disclosure is to provide a small cell base station antenna apparatus that is capable of preventing a poor aesthetic appearance (aesthetic external appearance) by having controllable directionality without exposure of various cables for electrical connection between a radio unit and an antenna module to the outside, and a connector for same.

Still another object of the present disclosure is to provide a small cell base station antenna apparatus that is capable of achieving dual banding in various places by dividing a portion of one antenna module to cover different frequency bands or by providing a plurality of antenna modules to cover respective different frequency bands, and a connector for same.

Yet another object of the present disclosure is to provide a small cell base station antenna apparatus that is capable of ensuring a wide range of directional control angles by each multifunction link mediating installation of a plurality of antenna modules on a radio unit, and a connector for same.

A further object of the present disclosure is to provide a small cell base station antenna apparatus that enables easy installation by means of its multifunction link, and a connector for same.

The present disclosure is not limited to the above-mentioned objects, and other objects of the present disclosure can be clearly understood by those skilled in the art from the following description.

### [Technical Solution]

In accordance with an aspect of the present disclosure, there is provided a small cell base station antenna apparatus that includes a radio Unit (RU), at least one antenna module installed to be tiltable and steerable with respect to the radio unit, and a multifunction link configured to mediate the installation of each antenna module to the radio unit, wherein the multifunction link includes a center body, a first fixture connected between one end of the center body and the antenna module, and a second fixture connected between the other end of the center body and the radio unit, and wherein the first fixture and the second fixture are coupled via a ball joint to enable the antenna module to be installed to perform tilting rotation and steering rotation motions with respect to the radio unit.

The ball joint may include a first ball joint having one end partially accommodated and coupled to an internal space of the first fixture and the other end connected to the antenna module to control directionality of the antenna module by tilting or steering motion, and a second ball joint having one end partially accommodated and coupled to an internal space of the second fixture and the other end connected to a cable receiving pipe configured to mediate connection with the radio unit, thereby controlling additional directionality of the antenna module.

The multifunction link may be electrically connected to the antenna module and the radio unit via a connector.

The connector may include a male connector coupled to each tip of a plurality of coaxial cables accommodated in a concealed manner into the multifunction link, and a female connector provided on each of the antenna module and the radio unit.

When the female connector is provided on the radio unit, it may include a coupling flange having an inner surface directly connected to an RF filter provided inside the radio unit, and a female terminal block having an outer surface connected to the male connector.

The female connector may be provided such that a number of through-pin terminals corresponding to the coaxial cables penetrate to connect the inner surface of the coupling flange and the outer surface of the female terminal block.

The plurality of coaxial cables may be equipped with either two strands for establishment of a 2T2R transmission line between the radio unit and the antenna module or four strands for establishment of a 4T4R transmission line between the radio unit and the antenna module. The male connector may have terminal pins formed corresponding to the number of coaxial cables. The female connector may have terminal grooves formed corresponding to each other, the respective terminal pins being inserted and connected into the terminal grooves.

The female connector may be fastened directly to the RF filter using multiple screws while the coupling flange is in contact with the RF filter.

Each through-pin terminal of the female connector may have a tip connected directly to a power supply connector provided on the RF filter.

When the coaxial cables are equipped with four strands, the male connector may further include a single ground washer at the center of terminal pins corresponding to the coaxial cables.

The cable receiving pipe may accommodate the plurality of coaxial cables to conceal them from the outside, and have one end connected to the radio unit and the other end connected to the fixture. The male connector may be connected to each of one end and the other end of the coaxial cables.

The male connector may include a male terminal block connected to each of one end and the other end of the coaxial cables, a plurality of guide pins protruding from the male terminal block toward the female connector, a plurality of terminal pins extending from the coaxial cables and protruding from the male terminal block toward the female connector, and a retainer nut configured to maintain electrical connection force of the plurality of terminal pins to the female connector.

The retainer nut may be fastened to a nut fastening end provided on the female connector, thereby maintains the connection force.

The antenna module may be configured to have a plurality of antenna subarrays arranged to cover dual frequency bands on one antenna board, and realize antenna beamforming in different frequency bands within the same direction of the antenna module set by the multifunction link.

The antenna module may be configured to have a plurality of antenna subarrays arranged to cover different frequency bands, and have directionality set in different directions by the multifunction link.

The antenna module may be provided for a small cell base station.

The radio unit may be installed on either a support pole, a wall, or a ceiling provided indoors.

The first fixture and the second fixture may be connected orthogonally to the center body.

The multifunction link may further include an over-rotation prevention latch configured to limit an angle of rotation direction of the first or second ball joint with respect to the first or second fixture.

The over-rotation prevention latch may have a pair of latching projections fixed to an internal space corresponding to between the first fixture and the first ball joint or between the second fixture and the second ball joint and protruding in a direction facing each other in the internal space, the pair of latching projections being latchable on a pair of latching plates extending toward the center body inside the first ball joint or the second ball joint.

The pair of latching plates may be positioned so as to form an angle of rotation separation of 90 degrees with the pair of latching projections when the antenna module does not perform the tilting rotation or steering rotation motion.

In accordance with another aspect of the present disclosure, there is provided a connector for a small cell base station antenna apparatus that includes a radio unit (RU), at least one antenna module installed to be tiltable and steerable with respect to the radio unit, and a multifunction link configured to mediate the installation of each antenna module to the radio unit. The connector includes a male connector coupled to each tip of a plurality of coaxial cables accommodated in a concealed manner into the multifunction link, and a female connector including a coupling flange having an inner surface directly connected to an RF filter provided inside the radio unit and a female terminal block having an outer surface connected to the male connector.

The female connector may be provided such that a number of through-pin terminals corresponding to the coaxial cables penetrate to connect the inner surface and the outer surface.

The plurality of coaxial cables may be equipped with either two strands for establishment of a 2T2R transmission line between the radio unit and the antenna module or four strands for establishment of a 4T4R transmission line between the radio unit and the antenna module. The male connector may have terminal pins formed corresponding to the number of coaxial cables. The female connector may have terminal grooves formed corresponding to each other, the respective terminal pins being inserted and connected into the terminal grooves.

The female connector may be fastened directly to the RF filter using multiple screws while the coupling flange is in contact with the RF filter.

Each through-pin terminal of the female connector may have a tip connected directly to a power supply connector provided on the RF filter.

When the coaxial cables are equipped with four strands, the male connector may further include a single ground washer at the center of terminal pins corresponding to the coaxial cables.

The multifunction link may include a center body, a first fixture connected between one end of the center body and the antenna module, a second fixture connected between the other end of the center body and the radio unit, a first ball joint having one end partially accommodated and coupled to an internal space of the first fixture and the other end connected to the antenna module to control directionality of the antenna module by tilting or steering motion, and a second ball joint having one end partially accommodated and coupled to an internal space of the second fixture and the other end connected to a cable receiving pipe configured to mediate connection with the radio unit, thereby controlling additional directionality of the antenna module, in which case the female connector may be provided such that a number of through-pin terminals corresponding to the coaxial cables accommodated in the cable receiving pipe penetrate to connect the inner surface and the outer surface.

### [Advantageous Effects]

A small cell base station antenna apparatus and a connector for same according to exemplary embodiments of the present disclosure can achieve various effects as follows.

Firstly, it is possible to facilitate establishment of small cell base stations since the use of a multi-function link makes it easy to control the directionality of an antenna module even in narrow spaces.

Secondly, it is possible to prevent a poor aesthetic appearance (aesthetic external appearance) by having controllable directionality without exposure of various cables for electrical connection between a radio unit and an antenna module to the outside.

Thirdly, it is possible to ensure a wide range of directional control angles of a plurality of antenna modules for the radio unit by allowing angle control of the multifunction link through ball joints at two locations on both ends around the center body.

Fourthly, since the female connector provided on the radio unit to be connected to the male connector of the multifunction link is provided in direct contact with the power supply connector of the RF filter, and the through-pin terminals corresponding to the number of coaxial cables are provided to make electrical connection, it is possible to reduce the size of the product, expand space utilization, reduce insertion loss, and achieve the effect of cost reduction.

### [Description of Drawings]

FIG. 1 is a perspective view illustrating an external appearance of a small base station antenna apparatus according to the prior art.
FIG. 2 is a perspective view illustrating an external appearance of a small cell base station antenna apparatus according to an embodiment of the present disclosure.
FIG. 3 is an exploded perspective view of FIG. 2.
FIG. 4 illustrates a front view and a cross-sectional view taken along line A-A of FIG. 2.
FIG. 5 is a side cross-sectional view of FIG. 2.
FIG. 6 is a side view illustrating tilting of an antenna module in the configuration of FIG. 2.
FIG. 7 is a perspective view illustrating an embodiment of a radio unit with different specifications in the configuration of FIG. 2.
FIG. 8 is a conceptual diagram illustrating beamforming by two frequency bands of CBRS and DoD in one antenna module.
FIG. 9 is a top view of the actual antenna apparatus of FIG. 8.
FIGS. 10A and 10B are front views illustrating various implementations of support-pole-mounted and wall-mounted types as implementations of dual frequency bands for each antenna module.
FIG. 11 is a perspective view illustrating an external appearance of a small cell base station antenna apparatus (support-pole-mounted type) according to a first embodiment of the present disclosure.
FIG. 12 is a perspective view illustrating an external appearance of a small cell base station antenna apparatus (wall-mounted type) according to a second embodiment of the present disclosure.
FIG. 13 is a perspective view illustrating an external appearance of a small cell base station antenna apparatus (ceiling-mounted type) according to a third embodiment of the present disclosure.
FIGS. 14 and 15 illustrate perspective views of short-type and long-type multifunction links (a and b) each for connecting the radio unit and the antenna module, and cutaway perspective views (a and b) thereof.
FIG. 16 is a cross-sectional view taken along line B-B of FIG. 10.
FIG. 17 is an exploded perspective view illustrating the long-type multifunction link (b) of the multifunction links of FIGS. 14 and 15.
FIGS. 18A and 18B are exploded perspective views illustrating an example of the radio unit equipped with a connector according to the embodiment of the present disclosure.
FIG. 19 illustrates downward and upward exploded perspective views of a modified radio-unit-side female connector provided on the radio unit, which is one component in the configuration of the connector of the small cell base station antenna apparatus according to the embodiment of the present disclosure.
FIG. 20 is a partial cutaway perspective view illustrating connection of a male connector of the multifunction link to the radio-unit-side female connector of FIGS. 18A and 18B.
FIG. 21 is a perspective view illustrating a small cell base station antenna apparatus with a modified multifunction link.
FIGS. 22A and 22B are front and rear exploded perspective views of FIG. 21.
FIG. 23 is an exploded perspective view illustrating the modified multifunction link of FIG. 21.
FIG. 24 is a cross-sectional view illustrating a portion of male-female coupling in the modified multifunction link of FIG. 21.
FIG. 25 is a cross-sectional view illustrating the modified multifunction link of FIG. 21.
FIG. 26 is a cross-sectional view illustrating a male connector of the modified multifunction link of FIG. 21.
FIG. 27 is an exploded perspective view illustrating the modified multifunction link of FIG. 21.
FIG. 28 is a cutaway perspective view of FIG. 27.
FIG. 29 is a cross-sectional view of FIG. 27.
FIG. 30 is a cutaway perspective view illustrating an over-rotation prevention latch referenced in FIGS. 27 to 29.
FIG. 31 is an internal front view illustrating an operation of the over-rotation prevention latch of FIG. 30.
FIG. 32 illustrates a cross-sectional view, a cutaway perspective view, and a partial enlarged view of a cable receiving pipe in the configuration of the modified multifunction link of FIG. 21.
FIG. 33 is a projection plane diagram for explaining an effect of operation of the modified multifunction link of FIG. 21.

### [List of Reference Numerals]

100: base station antenna apparatus 110: antenna module
111: antenna housing 113: radome
115: antenna board 117: patch element
118: antenna subarray 119: radiating element module
120: radio unit 121: installation panel
122: rear housing 123: front housing
150: female connector 151: female terminal block
152: guide groove 153: terminal groove
154: ring receiving groove 155: foreign substance prevention ring
200: multifunction link 205: center body
200': modified multifunction link 210: fixture
210A: first fixture 210B: second fixture
217: assembly screw 220: ball joint
220A: first ball joint 220B: second ball joint
225: moving lock 230: cable receiving pipe
240: coaxial cable 250: male connector
251: male terminal block 252: guide pin
253: terminal pin 254: guide ring
256: retainer nut 257: C-ring

### [Best Mode]

Hereinafter, a small cell base station antenna apparatus and a connector for same according to exemplary embodiments of the present disclosure will be described in detail with reference to the accompanying drawings.

It should be noted that reference numerals are added to the components of the accompanying drawings to facilitate understanding of the embodiments described below and the same reference numbers will be used throughout the drawings to refer to the same or like parts wherever possible. In certain embodiments, detailed descriptions of constructions or functions well known in the art may be omitted to avoid obscuring appreciation of the disclosure by a person of ordinary skill in the art.

The terms such as "first", "second", "A", "B", "(a)", and "(b)" may be used herein to describe components in the embodiments of the present disclosure. These terms are not used to define an essence, order or sequence of a corresponding component but used merely to distinguish the corresponding component from other component(s). Unless otherwise defined, all terms, including technical and scientific terms, used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

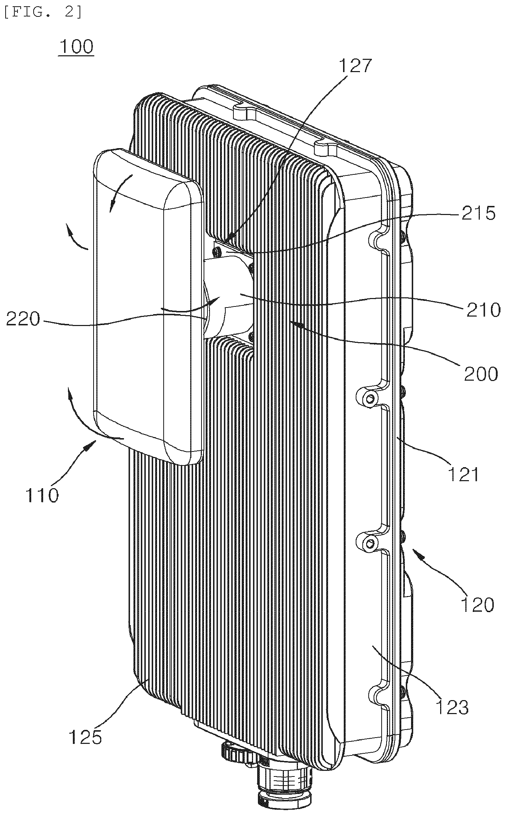

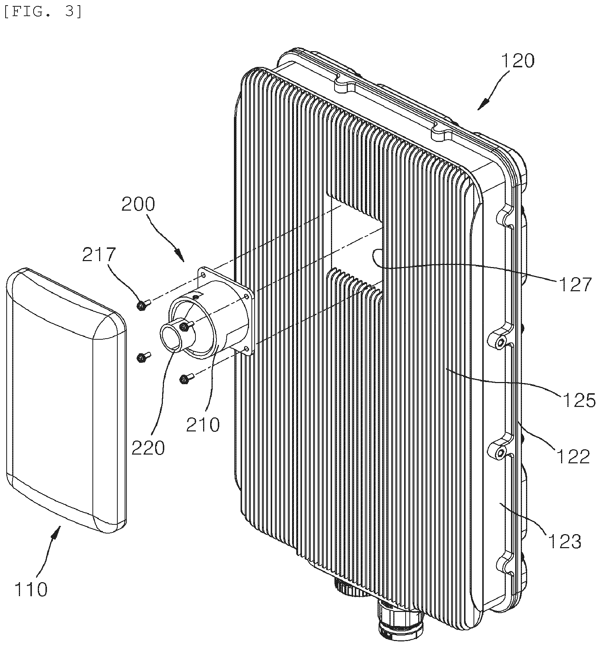

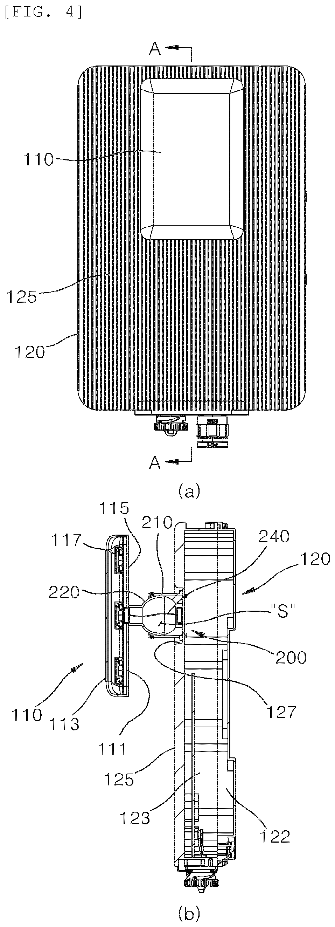

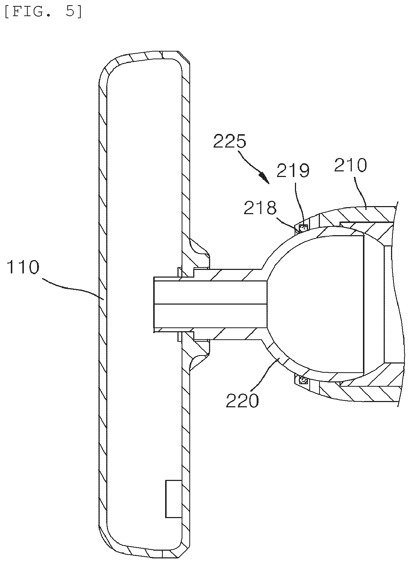

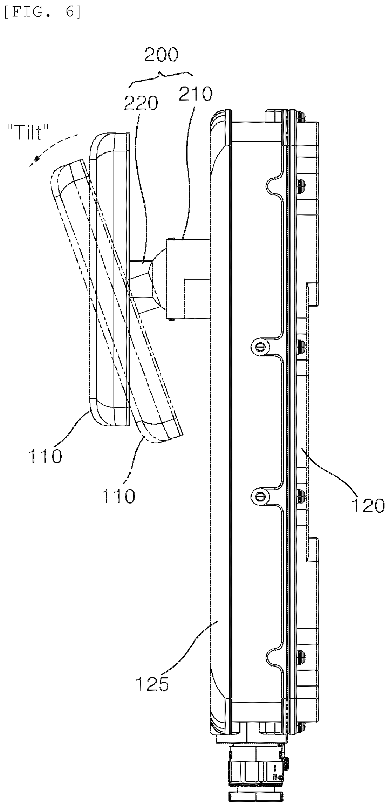

FIG. 2 is a perspective view illustrating an external appearance of a small cell base station antenna apparatus according to an embodiment of the present disclosure. FIG. 3 is an exploded perspective view of FIG. 2. FIG. 4 illustrates a front view and a cross-sectional view taken along line A-A of FIG. 2. FIG. 5 is a side cross-sectional view of FIG. 2. FIG. 6 is a perspective view illustrating tilting of an antenna module in the configuration of FIG. 2.

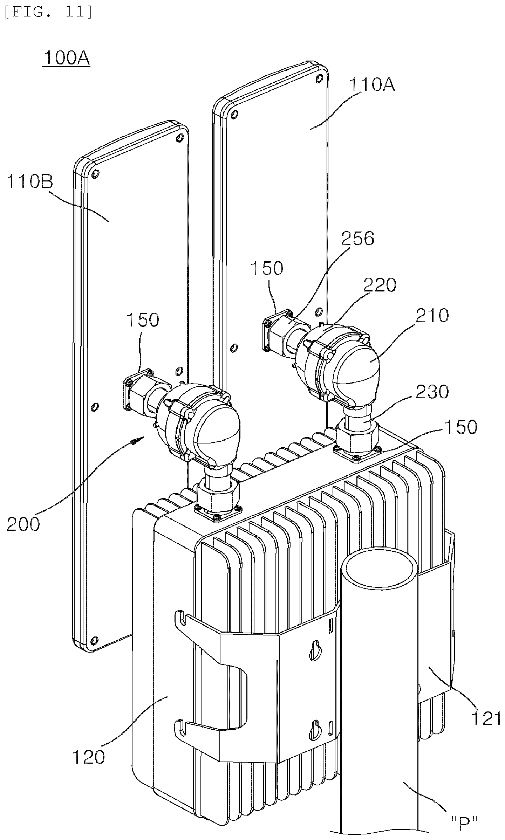

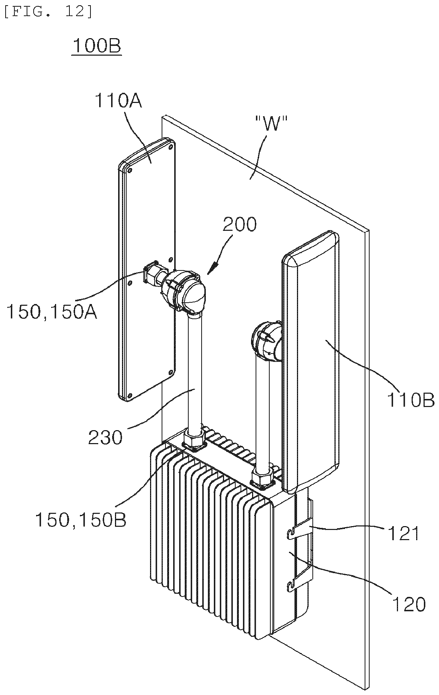

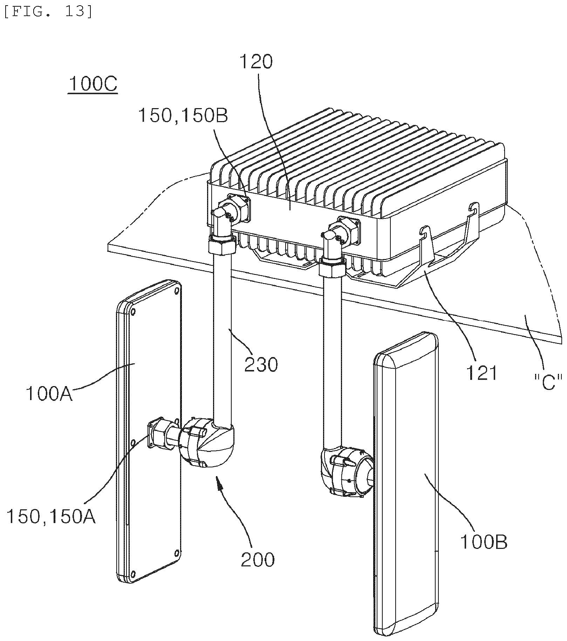

The small cell base station antenna apparatus, which is designated by reference numeral 100, according to the embodiment of the present disclosure includes a radio unit 120 and an antenna module 110, which are installed at a predetermined place, as illustrated in FIGS. 2 to 5. Here, the predetermined place where the small cell base station antenna apparatus 100 according to the present disclosure is installed may refer to a public place, a densely populated area, or a place such as a large shopping mall or an airport building, so as to perform the function as a small cell base station, and may be a structure suitable for in-building (indoor) installation, such as a support-pole-mounted type (see FIG. 11 to be described later), a wall-mounted type (see FIG. 12 to be described later), and a ceiling-mounted type (see FIG. 13 to be described later), which will be described later.

The antenna module 110 may refer to an antenna device having at least one frequency band. The radio unit (RU) 120 may refer to a device that is connected to an antenna for each frequency band provided to the antenna module 110 to perform transmission/reception between the antenna and the base station. An example of the radio unit 120 may be a remote radio head (RRH) that remotely separates a portion of a radio unit from a base station facility. The radio unit 120 is a relay device that performs functions such as receiving weakened signals to amplify or retransmit them, formalizing distorted waveforms, and readjusting timing between a base station and a mobile communication terminal in a mobile communication system.

In the small cell base station antenna apparatus 100 according to the embodiment of the present disclosure, as illustrated in FIG. 3, the radio unit 120 may first be mounted on a structure such as a support pole, a wall, or a ceiling in an indoor space (house), and the antenna module 110 may then be mounted tiltably and steerably on the front of the radio unit 120 via a multifunction link 200 to be described later.

It is, however, not necessary that the radio unit 120 first be mounted on the indoor structure (support pole, wall, or ceiling) as illustrated in FIGS. 2 to 5. For example, it is also possible that the antenna module 110 is first installed on the radio unit 120 and then mounted on the indoor structure as illustrated in FIGS. 11 to 13 to be described later.

As illustrated in FIG. 4, the antenna module 110 may include an antenna housing 111, and a radome 113 provided to cover the front of the antenna housing 111, wherein a predetermined space is defined between the antenna housing 111 and the radome 113.

An antenna board 115 in the form of a printed circuit board may be installed in the predetermined space of the antenna housing 111, and a plurality of radiating elements may be mounted and arranged on the front of the antenna board 115. The radiating elements mounted and arranged on the antenna board 115 may each vary depending on the type of antenna, but it is explained in an embodiment that a patch type element (patch element) 117 is adopted.

As illustrated in FIGS. 2 to 5, the small cell base station antenna apparatus 100 according to the present disclosure may further include a multifunction link 200 that mediates coupling of the antenna module 110 to the front of the radio unit 120.

In more detail, as illustrated in FIGS. 2 to 5, the radio unit 120 may include a rear housing 122 that is installed via an installation panel 121 (see FIG. 11 and the drawings below) on one of the support pole P, the wall W, and the ceiling C provided in the indoor space, and a front housing 123 that defines a predetermined space with the rear housing 122, wherein various internal components may be installed in the predetermined space.

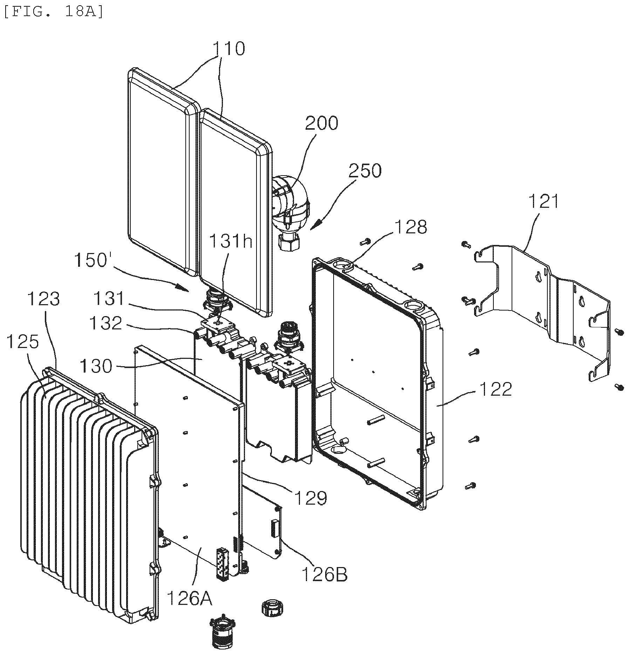

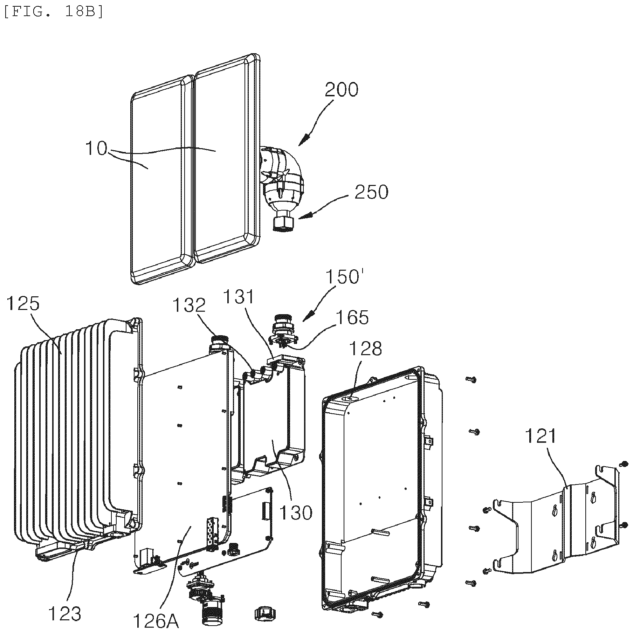

The internal components installed inside the radio unit 120 may be, although not shown, a board (main board) (see front board 126A of FIGS. 18A and 18B to be described later), an RF filter 130 (see FIGS. 18A and 18B to be described later), two power amplification units (PAUs), and a power supply unit (PSU).

The radio unit 120 may have a plurality of heat sink fins 125 formed integrally on the front of the front housing 123 thereof to dissipate heat generated in the predetermined space to the outside through the plurality of heat sink fins 125. Although the plurality of heat sink fins 125 are described as being formed only in the front housing 123 of the radio unit 120 in the small cell base station antenna apparatus 100 according to the embodiment of the present disclosure, the present disclosure is not necessarily limited thereto. It is to be noted in advance that a plurality of heat sink fins 125 may also be formed in the rear housing 122 as in other embodiments described later.

The front of the front housing 123 may be provided with an installation groove 127 formed by removing a portion of the heat sink fins 125 in the form of a square face, so as to couple the multifunction link 200 to the installation groove 127 by multiple assembly screws 217. It is, however, not necessary to provide the installation groove 127 in the form of a removed square face on the front of the front housing 123 for installation of the multifunction link 200. For example, as in antenna apparatuses 100A, 100B, and 100C of other embodiments described later with reference to FIGS. 11 to 13, the multifunction link 200 may be connected to the lateral area (which is a concept including an upper portion, a lower portion, a left side, and a right side) of the radio unit 120. If the position of installation of the multifunction link 200 to the radio unit 120 is changed, the shape design of the RF filter provided inside the radio unit 120 may be changed unavoidably. This will be described in more detail later.

As illustrated in FIGS. 3 to 5, the multifunction link 200 may include a fixture 210 that has a cylindrical shape with a portion open on one side thereof and is connected to the radio unit 120 via the cable receiving pipe 230 or directly without the cable receiving pipe 230 on the other side thereof, and a ball joint 220 that has one end of which a portion is inserted and installed into the open side of the fixture 210 and the other end coupled to the antenna module 110.

The embodiment in which the fixture 210 is connected to the radio unit 120 via the cable receiving pipe 230 will be described in more detail later after description of first to third embodiments of FIGS. 11 to 13. Particularly, since the multifunction link 200 including the cable receiving pipe 230 basically performs the function of mediating the connection of the antenna module 110 to the radio unit 120, it is preferable that the cable receiving pipe 230 be made of a material with sufficient rigidity to be able to partially perform the function of the support pole.

The ball joint 220 accommodated and installed inside the fixture 210 may be substantially in the form of a ball with a portion of one end open, and may be latched by the end of the open side of the fixture 210 to prevent its detachment to the outside (especially, frontwards). Here, forming a portion of one end of the ball joint 220 to be open is for penetration installation of a plurality of coaxial cables 240 to be described later.

The ball joint 220 may also be hollow from its portion installed in the fixture 210 to its portion installed in the antenna module 110 to communicate with the space in the fixture 210. The coaxial cables 240 may be installed in the internal space communicating between the fixture 210 and the ball joint 220 to perform electrical connection between the radio unit 120 and the antenna module 110.

In this case, it is preferable that each coaxial cable 240 be made of a flexible material so that the antenna module 110 is tiltable and steerable and does not interfere with the movement of the ball joint 220 with respect to the fixture 210.

An antenna-side male connector and a radio-unit-side male connector may be provided at one end and the other end of the coaxial cable 240, respectively. An antenna-side female connector and a radio-unit-side female connector may be provided at the back of the antenna module and the outer surface of the radio unit for connection to the antenna-side male connector and the radio-unit-side male connector, respectively. This will be described in more detail later.

In this way, the small cell base station antenna apparatus 100 according to the present disclosure can prevent a poor aesthetic appearance by concealing the plurality of coaxial cables 240 electrically connecting the radio unit 120 and the antenna module 110 from the outside without twisting.

The ball joint 220 may perform tilting rotation and steering rotation motions to maintain a predetermined angle in all directions including up and down directions or left and right directions with respect to the fixture 210. Here, the term "tilting rotation motion" is a concept that includes all motions in which the top and bottom of the antenna module 110 swing in back and forth directions, and the term "steering rotation motion" is a concept that includes all motions in which the left and right ends of the antenna module 110 swing in left and right directions. In the small cell base station antenna apparatus 100 according to the embodiment of the present disclosure, the ball joint 220 may be provided such that not only one of the tilting rotation and steering rotation motions of the antenna module 110 is performed, but also both of them are performed simultaneously or sequentially.

In more detail, the ball joint 220 may be tilted and steered at a predetermined angle in all directions, including up and down directions or left and right directions, around the arbitrary reference point of its one end accommodated into the fixture 210. As the ball joint 220 is tilted and steered, the antenna module 110 coupled thereto is also tiltable and steerable, with the consequence that the directionality of the antenna module 110 may be controlled in a direction desired by the designer.

The ball joint 220 may perform tilting rotation and steering rotation motions while forming a certain amount of frictional force with the inner surface of the fixture 210. To this end, the inner surface of the fixture 210 or the inserted outer surface of the ball joint 220 may be further provided partially with a friction pad (or friction member) (not shown) that forms a predetermined frictional force therewith.

As illustrated in FIG. 5, the multifunction link 200 may further include a moving lock 225 that fixes the ball joint 220 to the fixture 210 at a moving fixed point after the ball joint 220 is tilted and steered at a predetermined angle with respect to the fixture 210.

Any means may be adopted in place of the moving lock 225 as long as it is configured to fix the ball joint 220 to the fixture 210. For example, locking may be implemented by a fixing bolt (not shown) or the like that penetrates the outside of the fixture 210 accommodating the ball joint 220 to interfere with a portion of the outer surface of the ball joint 220.

As such, the small cell base station antenna apparatus 100 according to the present disclosure has an advantage of preventing a poor aesthetic appearance by avoiding the external exposure of the plurality of coaxial cables 240 connecting the radio unit 120 and the antenna module 110 using the multifunction link 200, and of maximizing space utilization by only enabling the relatively small antenna module 110 to perform tilting rotation and steering rotation motions and preventing the relatively large radio unit 120 from performing tilting rotation and steering rotation motions.

In addition, the small cell base station antenna apparatus 100 according to the present disclosure has an advantage of having customized controllable directionality for densely populated or high-demand spaces regardless of the installation position whether it is an indoor or outdoor space since the antenna module is provided to perform tilting rotation and steering rotation motions via the multifunction link 200 on the front of the radio unit 120 (FIG. 6 illustrates only tilting motion) as illustrated in FIG. 6.

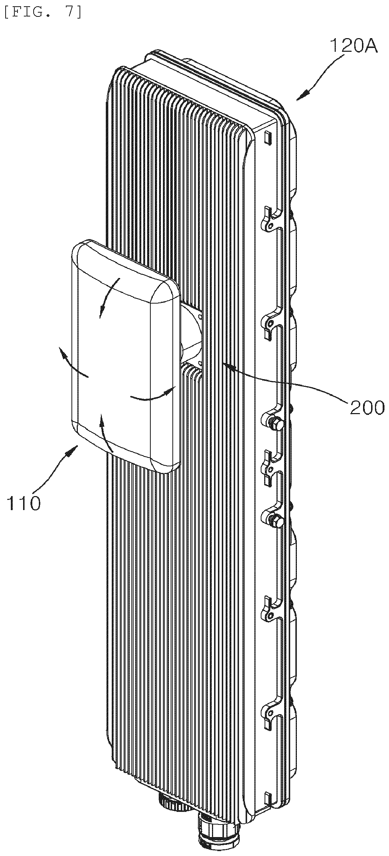

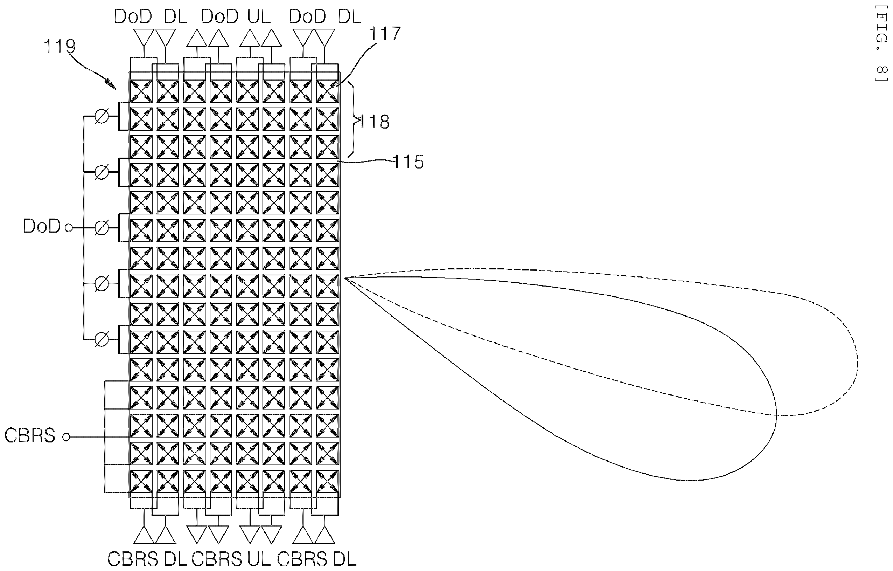

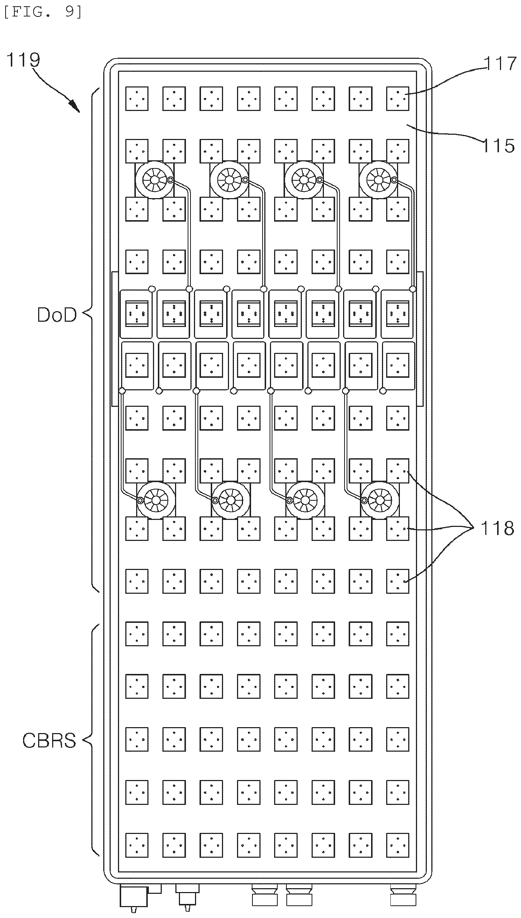

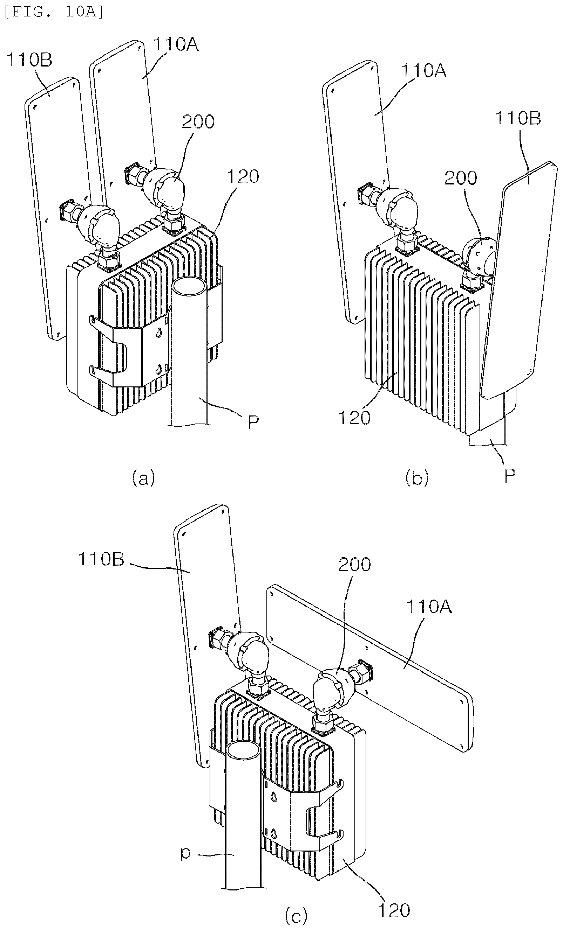

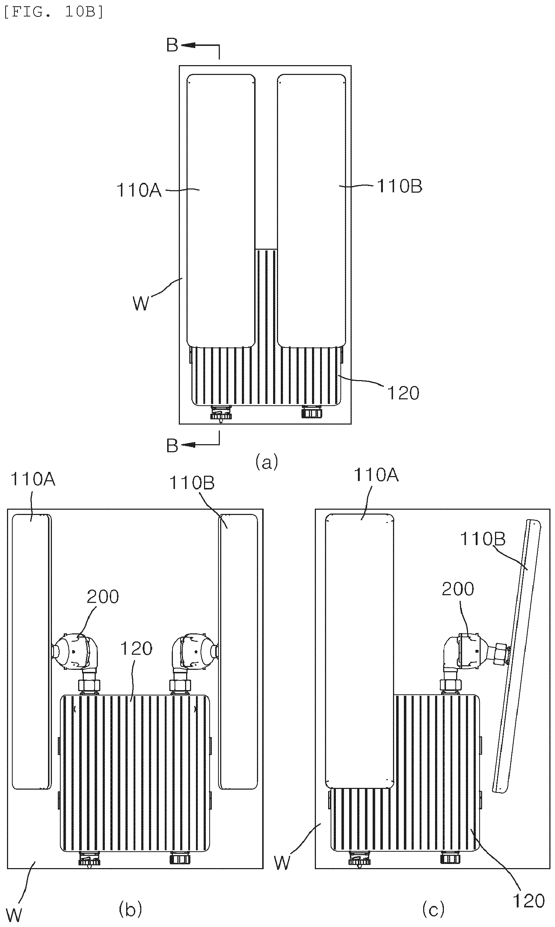

FIG. 7 is a perspective view illustrating an embodiment of the radio unit with different specifications in the configuration of FIG. 2. FIG. 8 is a conceptual diagram illustrating beamforming by two frequency bands of CBRS and DoD in one antenna module. FIG. 9 is a top view of the actual antenna apparatus of FIG. 8. FIGS. 10A and 10B are front views illustrating various implementations of support-pole-mounted and wall-mounted types as implementations of dual frequency bands for each antenna module.

As illustrated in FIG. 7, the antenna module 110 may have the same specification to which patch antenna elements are applied, but only the radio unit 120 may have different specifications. In more detail, compared to the radio unit 120 illustrated in FIGS. 2 to 6, the radio unit 120 illustrated in FIG. 7 may have a specification with a relatively smaller lateral width but a relatively larger vertical length. In this case, it is preferable that the antenna module 110 be set to be installed at an appropriate position considering the weight and tilting rotation and steering rotation motions thereof.

However, only the specifications of the radio unit 120 may not necessarily be applied differently in the small cell base station antenna apparatus 100 according to the present disclosure.

In other words, as illustrated in FIGS. 8 and 9, the front of the antenna module 110 may be provided with a plurality of radiating element modules 119 in which a plurality of patch elements 117 are arranged to configure a plurality of antenna subarrays 118 for realizing beamforming at a specific frequency band.

The plurality of radiating element modules 119 may be implemented as an antenna board 115 within one antenna module 110 in a format for establishment of frequency bands corresponding to small cell base stations. Alternatively or additionally, as illustrated in FIGS. 8 and 9, the plurality of radiating element modules 119 may be implemented for classification in a dual-band form to cover frequency bands corresponding to department of defense (DoD) and citizens broadband radio services (CBRS) on one antenna board 115 for macro use.

In more detail, as illustrated in FIGS. 8 and 9, the plurality of radiating element modules 119 may be configured such that the plurality of antenna subarrays 118 composed of the plurality of patch elements 117 are arranged on the upper side of the front of the antenna board 115 for macro use to implement a DoD channel at a frequency band of 3450 to 3550 MHz of the dual frequency bands to implement a gain of 17.5 dBi, and the plurality of antenna subarrays 118 composed of the plurality of patch elements 117 are arranged on the lower side of the front of the antenna board 115 for macro use to implement a CBRS channel at a frequency band of 3550 to 3700 MHz of the dual frequency bands to implement a gain of 15.5 dBi.

As illustrated in FIG. 8, the plurality of radiating element modules 119 established to cover dual frequency bands in this way may realize antenna beamforming so that the H-Beam width has a value of 55° to 90° for both DoD and CBRS channels, and may realize different antenna beamforming so that the V-Beam width has a value of 7.5° for the DoD channel and a value of 14.6° for the CBRS channel.

In other words, the antenna module 110 may be implemented to realize antenna beamforming for covering macro frequency bands and small cell frequency bands, as described above, within one antenna board 115. In addition, it is possible to provide an advantage of maximizing uplink (UL) coverage due to separation of TRx and antenna subarrays 118 by band even though the directionality of the antenna module 110 is controlled identically.

It is, however, not necessary that the antenna subarrays 118 are arranged to cover dual frequency bands on one antenna board 115. For example, as illustrated in FIGS. 10A and 10B to be described later, it goes without saying that two or more antenna modules 110A and 110B may be connected to one radio unit 120 via respective multifunction links 200 to cover respective unique frequency bands and each of the antenna modules 110A and 110B may be controlled in directionality by an associated multifunction link 200 in a direction with strong coverage requirement.

For example, as illustrated in FIG. 10A(a) of the support-pole-mounted type and FIG. 10B(a) of the wall-mounted type, the antenna modules 110A and 110B equipped with respective dual frequency bands may have their directionality controlled in the same direction (forwards), as illustrated in FIG. 10A(b) of the support-pole-mounted type and FIG. 10B(b) of the wall-mounted type, the antenna modules 110A and 110B may both have their directionality controlled in opposite directions, and as illustrated in FIG. 10A(c) of the support-pole-mounted type and FIG. 10B(c) of the wall-mounted type, one antenna module 110A may have its directionality controlled forwards and the other antenna module 110B may have its directionality controlled laterally.

In this case, each radiating element module 119 of the antenna modules 110A and 110B may have a specification suitable for small cell base stations, not macro use, and a specification capable of achieving a maximum gain of either 15 dBi, 13 dBi, or 11 dBi, with the consequence that the directionality of the antenna modules may be controlled in a desired direction. Therefore, it is naturally possible to maximize the effect of the small cell base stations.

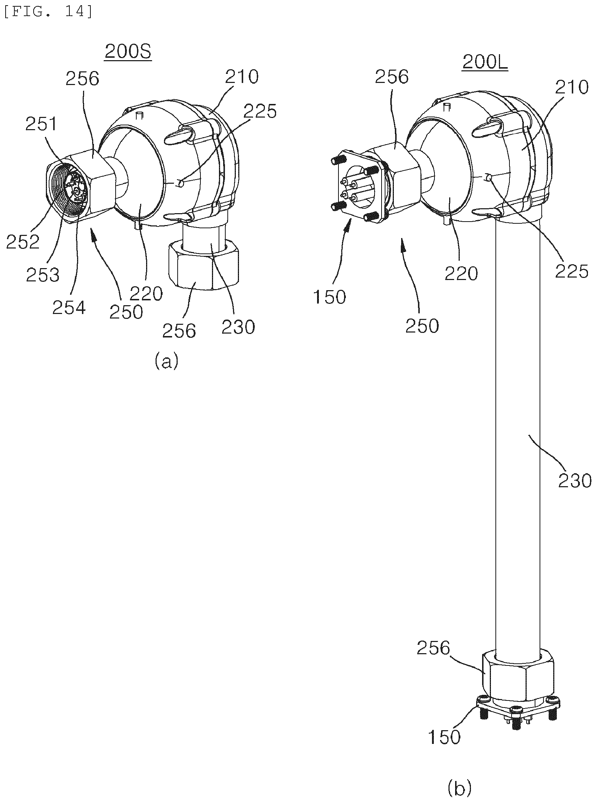

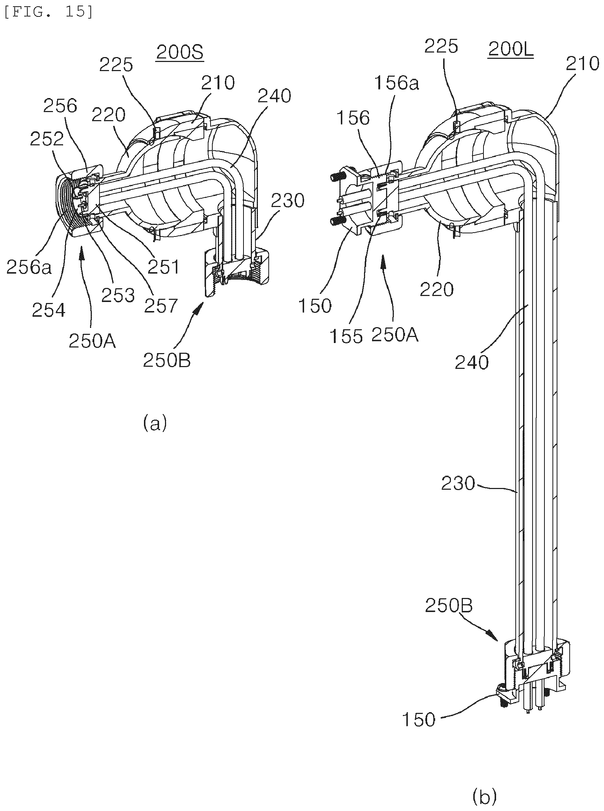

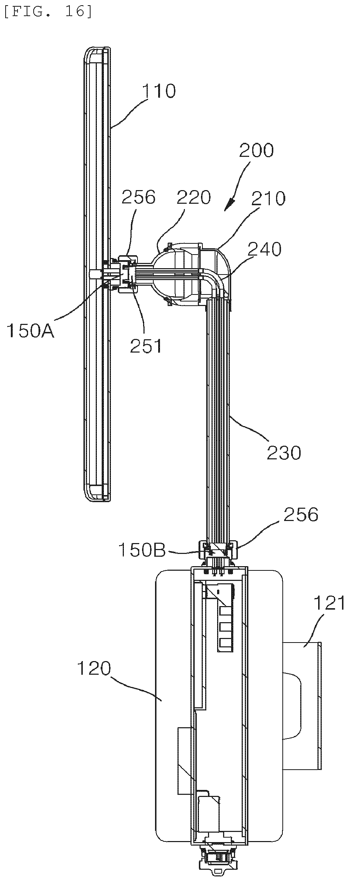

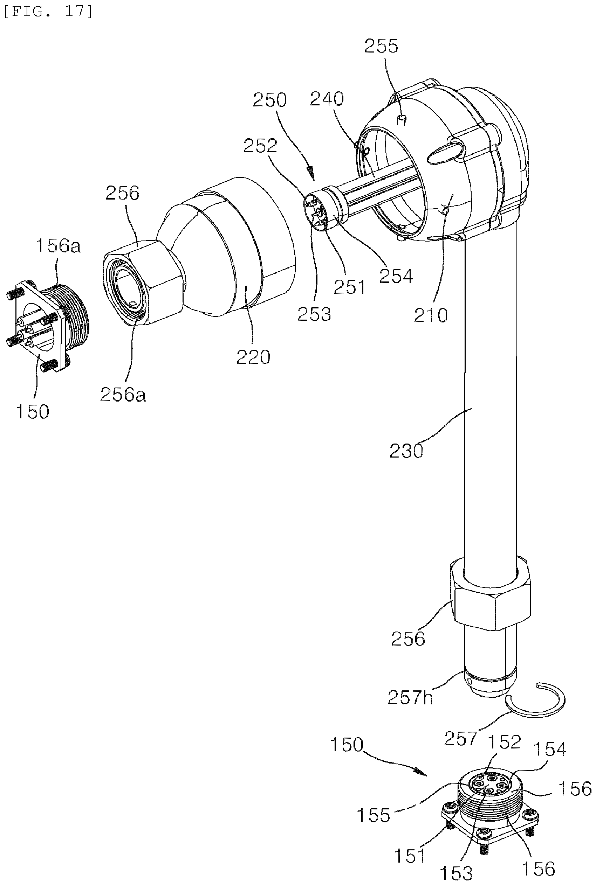

FIG. 11 is a perspective view illustrating an external appearance of a small cell base station antenna apparatus (support-pole-mounted type) according to a first embodiment of the present disclosure. FIG. 12 is a perspective view illustrating an external appearance of a small cell base station antenna apparatus (wall-mounted type) according to a second embodiment of the present disclosure. FIG. 13 is a perspective view illustrating an external appearance of a small cell base station antenna apparatus (ceiling-mounted type) according to a third embodiment of the present disclosure. FIGS. 14 and 15 illustrate perspective views of short-type and long-type multifunction links (a and b) each for connecting the radio unit and the antenna module, and cutaway perspective views (a and b) thereof. FIG. 16 is a cross-sectional view taken along line B-B of FIG. 10. FIG. 17 is an exploded perspective view illustrating the long-type multifunction link (b) of the multifunction links of FIGS. 14 and 15.

As illustrated in FIGS. 11 to 13, the small cell base station antenna apparatus 100 according to the present disclosure may be configured such that the rear housing 122 of the radio unit 120 is installed in a concealed manner or fixed on either the support pole P, the wall W, or the ceiling C in the indoor space via the installation panel 121, and at least one (two in this embodiment) antenna module 110A or 110B is connected to the radio unit 120 via the multifunction link 200 so as to enable tilting rotation or steering rotation.

Referring to FIG. 11, the support pole P may be arranged indoors, for example, in a large building or the like for installation of the small cell base station antenna apparatus 100 according to this embodiment. The small cell base station antenna apparatus 100A according to the first embodiment of the present disclosure may be installed and equipped as a support-pole-mounted type in which the rear housing 122 corresponding to the back of the radio unit 120 is fixed to the support pole P so as to preset its directionality.

Referring to FIG. 12, the small cell base station antenna apparatus 100B according to the second embodiment of the present disclosure may be installed and equipped as a wall-mounted type in which the rear housing 122 corresponding to the back of the radio unit 120 is tightly fixed to the wall W of the indoor space such as large buildings.

Referring to FIG. 13, the small cell base station antenna apparatus 100C according to the third embodiment of the present disclosure may be installed and equipped as a ceiling-mounted type in which the rear housing 122 corresponding to the back of the radio unit 120 is tightly fixed to the ceiling C of the indoor space such as large buildings or in which the radio unit 120 is fixed so as to be concealed within the ceiling C.

Here, the radio unit 120 and each antenna module 110A or 110B may be electrically and signally interconnected via the multifunction link 200, which is appropriately adopted as either a short-type multifunction link (hereinafter, abbreviated as "short-type link 200S") or a long-type multifunction link (hereinafter, abbreviated as "long-type link 200L") referenced in FIGS. 14 and 15, depending on different surrounding environments such as installation positions and interference with surrounding configuration for controlling the directionality of the antenna module 110A or 110B.

As illustrated in FIGS. 14 and 15, the short-type link 200S and the long-type link 200L may have the same specification in configuration and function, and may be distinguished depending on whether the length of the cable receiving pipe 230 accommodating the plurality of coaxial cables 240 is relatively short or long. In general, the length of the cable receiving pipe 230 refers to a separation distance between the connection part with the radio unit 120 and the fixture 210 of the multifunction link 200. Accordingly, if the separation distance is long, it is preferable to adopt the long-type link 200L, but if the separation distance is short, it is preferable to adopt the short-type link 200S.

Referring to FIGS. 14 to 17, in the small cell base station antenna apparatus 100 according to the embodiment of the present disclosure, the multifunction link 200 may include the fixture 210, the ball joint 220, the cable receiving pipe 230, and the plurality of coaxial cables 240 as described above.

The multifunction link 200 may further include a male connector 250 provided at each end of the plurality of coaxial cables 240, wherein the male connector 250 includes an antenna-side male connector 250A provided at one end of the plurality of coaxial cables 240 for electrical connection to the antenna module 110 and a radio-unit-side male connector 250B provided at the other end of the plurality of coaxial cables 240 for electrical connection to the radio unit 120.

As illustrated in FIG. 15, the antenna-side male connector 250A may include a guide pin 252 and terminal pin 253 having a male shape, which will be described later, provided to be exposed at the antenna-side end of the ball joint 220. As illustrated in FIG. 15, the radio-unit-side male connector 250B may also include a guide pin 252 and terminal pin 253 having a male shape, which will be described later, provided to be exposed at the end of the cable receiving pipe 230.

Hereinafter, since the antenna-side male connector 250A and the radio-unit-side male connector 250B are basically the same configuration with the sole exception for their installation positions, they will be described as "male connector 250" for short.

In addition, the antenna module 110 and the radio unit 120 may be further provided with an antenna-side female connector 150A and a radio-unit-side female connector 150B for connection with the male connector 250, respectively.

As illustrated in FIGS. 11 to 13 and 15, the antenna-side female connector 150A may include a guide groove 152 and terminal groove 153 having a female shape, which will be described later, provided to be exposed at the back of the antenna module 110, and the radio-unit-side female connector 150B may also include a guide groove 152 and terminal groove 153 having a female shape, which will be described later, provided to be exposed at the side of the radio unit 120.

Hereinafter, since the antenna-side female connector 150A and the radio-unit-side female connector 150B are basically the same configuration with the sole exception for their installation positions, they will be described as "female connector 150" for short.

The plurality of coaxial cables 240 may be equipped with two or four strands to transmit electrical signals and accommodated inside the cable receiving pipe 230, and may have one end and the other end connected to the male connector 250. Hereinafter, for convenience of explanation, it is assumed that the coaxial cables 240 are equipped with four strands (4 pieces).

The male connector 250 may further include a male terminal block 251 that mediates connection of the ends of four coaxial cables 240 to respective terminal pins 253. The female connector 150 may further include a female terminal block 151 in which the guide groove 152 and the terminal groove 153 are machined.

In the male terminal block 251, four guide pins 252 may be arranged to protrude at 90-degree intervals, and four terminal pins 253 may be arranged to protrude at 90-degree intervals to the extent that they do not overlap with the four guide pins 252.

In the female terminal block 151, four guide grooves 152, into which the respective four guide pins 252 in the male terminal block 251 are inserted and accommodated, and four terminal grooves 153, into which the respective four terminal pins 253 in the male terminal block 251 are inserted and connected, may be arranged at mutually corresponding positions.

The male terminal block 251 may be further provided with a guide ring 254 that protrudes in a ring type toward the female connector 150 while surrounding the four guide pins 252 and the four terminal pins 253. The female terminal block 151 may be further provided with a ring receiving groove 154 into which the guide ring 254 in the male terminal block 251 is inserted. Here, a foreign substance prevention ring 155 may be further provided inside the ring receiving groove 154 to prevent the inflow of foreign substances from the outside.

The four guide pins 252, the guide ring 254, and the four terminal pins 253 provided on the male connector 250 may be inserted into the four guide grooves 152, the ring receiving groove 154, and the four terminal grooves 153 provided on the female connector 150, respectively, to electrically connect the antenna module 110 and the radio unit 120 via the multifunction link 200.

As illustrated in FIGS. 15 to 17, the multifunction link 200 may further include a retainer nut 256 that provides a predetermined retention force to maintain the electrical connection of the male connector 250 to the female connector 150.

The retainer nut 256 may have a female thread 256a formed on the inner surface thereof, and the female thread 256a of the retainer nut 256 may be fastened to a male thread 156a formed on the outer surface of the nut fastening end 156 formed on the outer surface of the female terminal block 151 of the female connector 150, thereby forming the predetermined retention force described above.

Here, a C-ring 257 may be disposed at the end of the male terminal block 251 to limit the fastening force of the retainer nut 256. The C-ring 257 may be fitted in one direction into a C-ring installation groove 257h formed at the end of the cable receiving pipe 230.

As such, the small cell base station antenna apparatus 100 according to the embodiment of the present disclosure provides an advantage of electrically connecting the radio unit 120 and the plurality of antenna modules 110 via the multifunction links 200, allowing the tilting or steering motion of each antenna module 110, and enabling simpler and more convenient installation work in the field.

Furthermore, since the male connector 250 and the female connector 150 are formed symmetrically, it is possible to provide an advantage of further increasing the diversity of directional design of the antenna module 110 if the four terminal pins 253 and the four terminal grooves 153 only need to be connected in any direction.

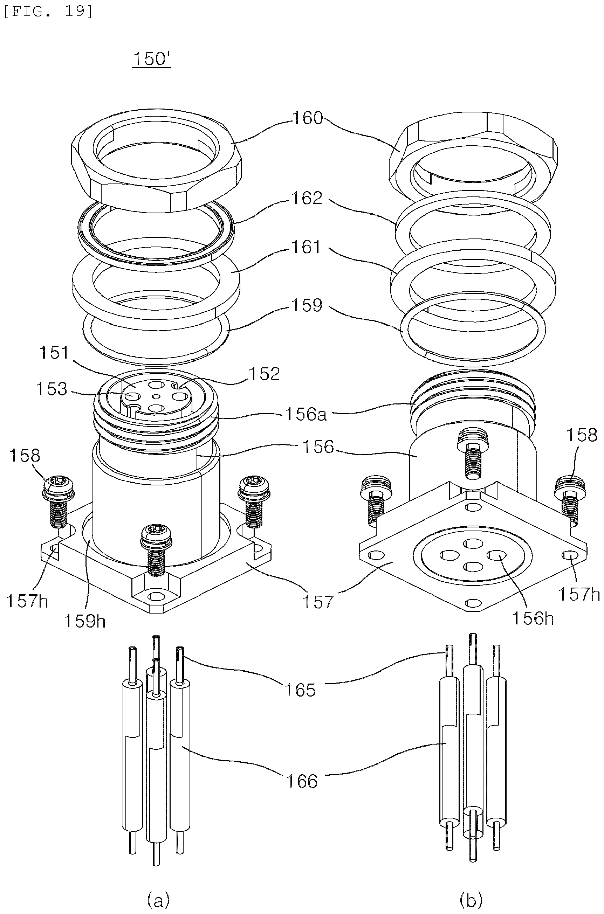

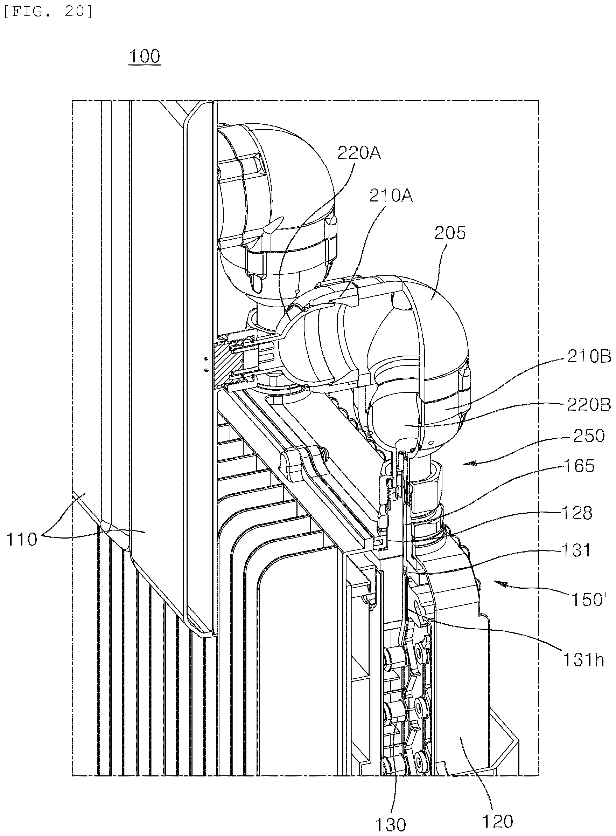

FIGS. 18A and 18B are exploded perspective views illustrating an example of the radio unit equipped with the connector according to the embodiment of the present disclosure. FIG. 19 illustrates downward and upward exploded perspective views of a modified radio-unit-side female connector provided on the radio unit, which is one component in the configuration of the connector of the small cell base station antenna apparatus according to the embodiment of the present disclosure. FIG. 20 is a partial cutaway perspective view illustrating connection of the male connector of the multifunction link to the radio-unit-side female connector of FIGS. 18A and 18B.

As illustrated in FIGS. 18A, 18B, and 19, the connector 150'/250 of the small cell base station antenna apparatus according to the embodiment of the present disclosure includes a male connector 250 coupled to the end of the plurality of coaxial cables 240 accommodated in a concealed manner inside the multifunction link 200, and a modified female connector 150' directly connected to the RF filter 130 provided inside the radio unit 120.

The modified female connector 150' includes a coupling flange 157 formed on one side thereof to be coupled to the RF filter 130 provided inside the installation space of the radio unit 120, and a female terminal block 151 formed to protrude from the coupling flange 157 toward the male connector 250 on the other side.

A nut fastening end 156 may be formed on the outer peripheral surface of the female terminal block 151, and may have a male thread 156a formed on the outer peripheral surface thereof to be fastened with the female thread 256a on the retainer nut 256.

Between the nut fastening end 156 and the center of the female terminal block 151, a ring receiving groove 154 into which the guide ring 254 formed on the male connector 250 is inserted may be provided in the form of a groove.

In the center of the female terminal block 151 physically partitioned from the nut fastening end 156 by the ring receiving groove 154, four terminal grooves 153 may be formed into which the four terminal pins 253 of the male connector 250 energized with the four-strand terminal of the coaxial cables 240 are inserted.

The male connector 250 may have two guide pins 252 that protrude toward the modified female connector 150' separately from the four terminal pins 253, and the modified female connector 150' may have guide grooves 152 formed into which the guide pins 252 of the male connector 250 are inserted and guided.

The two guide grooves 152 are preferably formed in positions where they are arranged at 180-degree intervals around the center of the outer surface of the female terminal block 151 and do not overlap with the four terminal grooves 153, and may be formed to partially overlap with the ring receiving groove 154 described above.

As described with reference to FIGS. 11 to 17, if the male connector 250 and the female connector 150 have four guide pins 252 and four guide grooves 152 formed to correspond to the four terminal pins 253 and the four terminal grooves 153, respectively, the connection thereof may be made as long as they are matched with each other at 90-degree intervals. However, in the case where the same male connector 250 and female connector 150 are used, if the four-strand coaxial cable 240 is replaced with a two-strand coaxial cable, the versatility may be limited in that it is difficult to guide the two terminal pins 253 and the two terminal grooves 153 to match each other at the exact position. Therefore, in the connector 150'/250 of the small cell base station antenna apparatus according to the embodiment of the present disclosure, even when the four-strand coaxial cable 240 is applicable, each of the guide pin 252 and the guide groove 152 is designed to be provided in two pieces spaced apart from each other by 180 degrees.

As illustrated in FIGS. 18A, 18B, and 20, the modified female connector 150' may have four through-pin terminals 165 arranged at positions corresponding to the four terminal grooves 153 to penetrate from the outer surface of the female terminal block 151 to the outer surface of the coupling flange 157 for connecting independent electrical signals to the RF filter 130 through the four terminal pins 253.

The female terminal block 151 may have a plurality of one-side through-holes 156h formed on the outer surface thereof to pass the four through-pin terminals 165 therethrough, the coupling flange 157 may have a plurality of other-side through-holes 157h formed on the outer surface thereof to pass the four through-pin terminals 165 therethrough, and the one-side through-holes 156h and the other-side through-holes 157h may communicate with each other.

Here, as illustrated in FIG. 19, a pin insulator 166 may be provided to surround the outer surface of each of the four through-pin terminals 165, thereby preventing an electrical short circuit.

The modified female connector 150' may further include a filter-side gasket 159 inserted and disposed into the gasket groove 159h formed at the boundary between the coupling flange 157 and the female terminal block 151, and a first outer washer 161 and a second outer washer 162, which are disposed on the outer peripheral surface of the female terminal block 151, supported on the outer surface of the radio unit 120 and interlocked when the outer fastening nut 160 is tightened.

The radio-unit-side female connector 150 already described with reference to FIGS. 11 to 17 is limited to only performing a physical connecting role since it is mounted on the outside of the radio unit 120 and connected with the male connector 250 of the multifunction link 200. In order to practically complete the electrical connection between the RF filter 130 of the radio unit 120 and the antenna module 110, there is a need for an inner connector (not shown) to electrically connect the RF filter 130 and the radio-unit-side female connector 150 within the radio unit 120.

On the other hand, the modified female connector 150' is placed such that the coupling flange 157 is stably fixed to the connection part (power supply connector) 131 directly provided on the RF filter 130 using multiple screws 158, and the through-pin terminals 165 corresponding to the number of coaxial cables 140 described above penetrate the inner surface of the coupling flange 157 and the outer surface of the female terminal block 151. Accordingly, the electrical connection between the RF filter 130 and the antenna module 110 may be completed directly at the moment the male connector 250 of the multifunction link 200 is connected to the female connector.

For example, as illustrated in FIG. 20, after the outer surface (one surface) of the coupling flange 157 is stably connected to the connection part (power supply connector) 131 provided on the RF filter 130 by the multiple screws 158 so as to be in direct contact with the connection part, and the first outer washer 161 and the second outer washer 162 are then disposed while the female terminal block 151 is exposed to the outside through the installation hole 128 formed in the radio unit 120, the modified female connector 150' is fixed to the radio unit 120 using the outer fastening nut 160, and each terminal pin 253 of the male connector 250 of the multifunction link 200 is electrically connected to the through-pin terminal 165 exposed through the terminal groove 153 in the female terminal block 151 exposed to the outside. Thus, direct power feeding to the RF filter 130 becomes possible.

In this case, the through-pin terminal 165 is connected to the male connector 250 of the multifunction link 200 while it is inserted and fastened in advance through the through-pin terminal connection hole 131h energized to the power supply connector 131 provided on the RF filter 130.

As the modified female connector 150' is changed in design so as to be electrically connected directly to the RF filter 130 inside the radio unit 120, there may be no need for additional installation of separate cable structures for connection conventionally or additional design of separate structures such as air lines that were essential when establishing the power supply connector of the RF filter 130 for prevention of impedance mismatch.

However, since the direct electrical connection of the modified female connector 150' with the RF filter 130 inside the radio unit 120 must be ensured stably, the shape design of the connection part (power supply connector) 131 of the existing RF filter 130 may also be modified accordingly.

In more detail, the RF filter 130 within the radio unit 120 to which the radio-unit-side female connector 150 described with reference to FIGS. 11 to 17 is applied has an advantage of allowing easy electrical connection using the cable structure (inner connector (not shown)) described above without changing the shape of the separate RF filter 130, even when applied as is to a structure in which power supply connectors are provided at the respective rear and front of the filter body (not shown) for conventional massive MIMO radio (MMR) which is a product in which the main board, the RF filter, and the antenna radiating element are stacked in that order.

However, the modified female connector 150' must have the through-pin terminal 165 directly connected to the RF filter 130 as described above because the power supply connector 131 at the front of the existing RF filter 130 must be changed in position design. However, in the embodiment of the present disclosure, as described later, as the internal components of the radio unit 120 are changed in position design, the positions of the power supply connector 131 at the front of the RF filter 130 as well as the power supply connector 132 (see FIG. 19(a)) at the rear thereof are changed.

Referring to FIGS. 18A and 18B for more detailed explanation, the radio unit 120 may define a predetermined space between the rear housing 122 and the front housing 123 in which various internal components to be described later are installed, and a plurality of heat sink fins 125 may be formed integrally on the front of the front housing 123.

Since the plurality of heat sink fins 125 are formed on the front of the front housing 123 to facilitate heat dissipation in the installation space of the radio unit 120, the front board 126A may be in close contact with the back of the front housing 123 to arrange a plurality of heating elements (e.g., FPGA elements, PA elements, or the like) mounted on the front of the front board 126A to be in direct surface thermal contact therewith.

Here, the front board 126A may be an integrated one board in which an original digital board having conventional digital board functions, an AMP board, and the like are formed integrally.

A shielding board 127 may be provided between the front board 126A and the RF filter 130 to block the thermal flow or electromagnetic wave flow therebetween.

A rear board 126B on which an electrical element with minimal heat dissipation is mounted may be placed at the bottom of the RF filter 130. Here, the rear board 126B may be a surge board.

In the case of a conventional antenna apparatus equipped with MMR, it was impossible to tightly install the main board, which is designed to prioritize heat dissipation, on the front housing 123 due to the antenna module (radiating element module) placed at the front line of the antenna apparatus. However, since the antenna module 110 is separated through the multifunction link 200 and the internal components are arranged in the configuration described above, the electrical connection structure between the RF filter 130 and the antenna module 110 via the multifunction link 200 is also changed in design in the radio unit 120 in this embodiment.

If the modified female connector 150' is adopted in the radio unit 120, there is no need to provide a separate inner connector. Therefore, it is possible to relatively reduce the size and installation space of the radio unit 120 and to achieve the advantage of cost reduction. In addition, since direct electrical connection to the RF filter 130 is made through the through-pin terminal 165, it is possible to significantly reduce the size of insertion loss caused by the addition of an existing cable-type inner connector or air line structure, which is able to enhance the performance of the antenna apparatus.

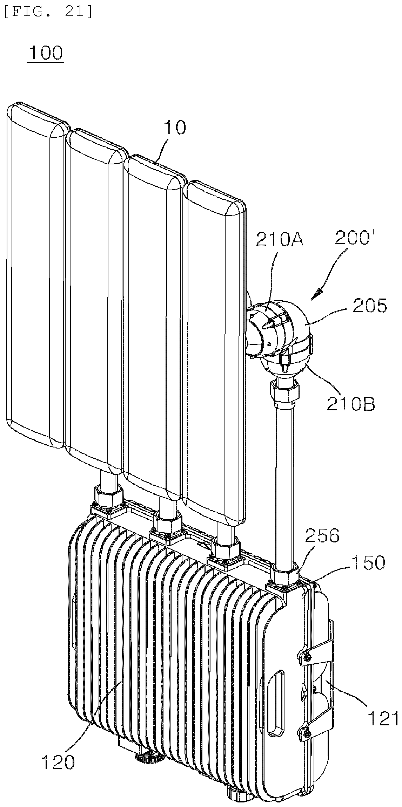

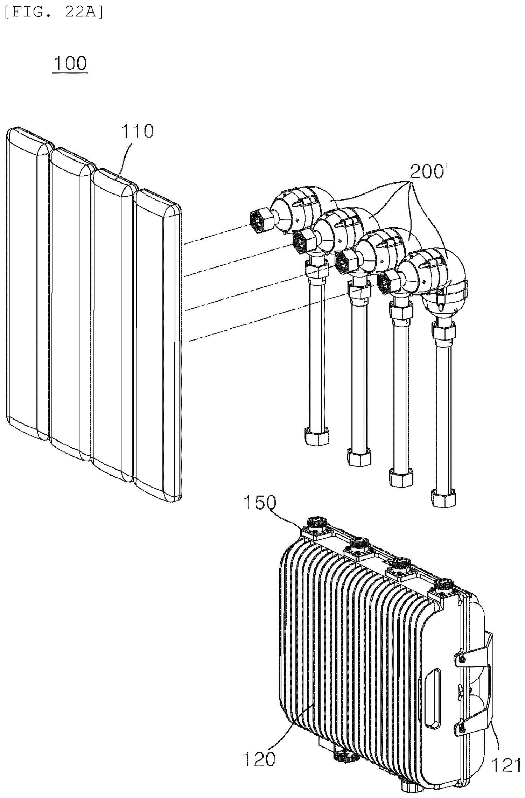

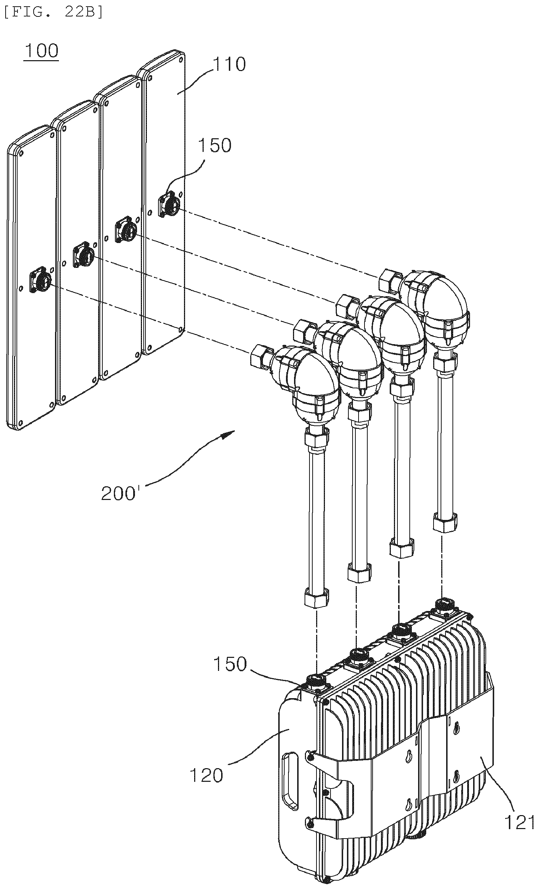

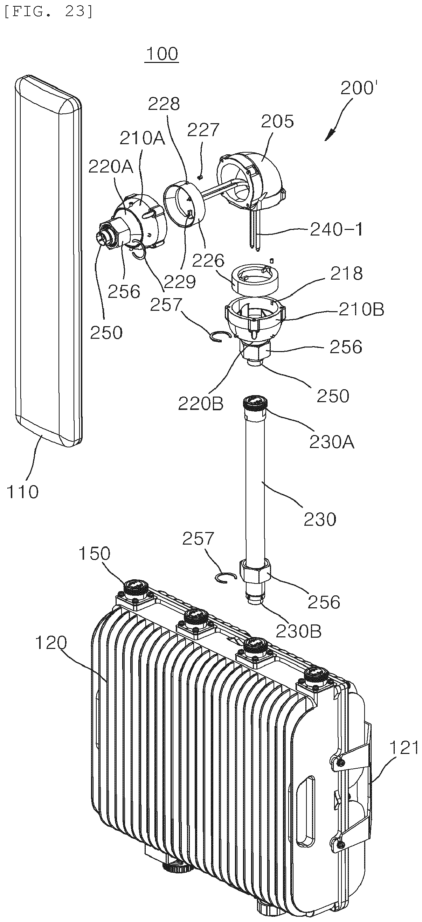

FIG. 21 is a perspective view illustrating a small cell base station antenna apparatus with a modified multifunction link. FIGS. 22A and 22B are front and rear exploded perspective views of FIG. 21. FIG. 23 is an exploded perspective view illustrating the modified multifunction link of FIG. 21.

In the modified multifunction link 200' illustrated in FIGS. 21 to 23, although the coaxial cables 240-1 are illustrated and described as being equipped with two strands (two pieces), the present disclosure is not necessarily limited thereto. For example, it should be noted that it is not excluded that the coaxial cables 240-1 are equipped with four strands (four pieces).

The small cell base station antenna apparatus 100 according to the embodiment of the present disclosure may include a modified multifunction link 200' as illustrated in FIGS. 21 to 23.

The modified multifunction link 200' is different from the multifunction link 200 (hereinafter, referred to as a "general multifunction link") described above with reference to FIGS. 5 to 7 and 11 to 17, in that the fixture 210 is divided into two parts 210A and 210B, a center body 205 is placed between the two fixtures 210A and 210B, and the two fixtures 210A and 210B are orthogonally coupled to the center body 205.

In the following, for convenience of explanation, among the two fixtures 210A and 210B, the fixture connected to the antenna module 110 is referred to as a first fixture 210A, and the fixture connected to the cable receiving pipe 230 is referred to as a second fixture 210B.

In other words, unlike the structure in which the general multifunction link 200' has only the fixture 210 and ball joint 220 connected to the antenna module 110 so that the directionality of the tilting rotation and steering rotation of the antenna module 110 is controllable at only one location, the modified multifunction link 200' has a first fixture 210A and ball joint 220A connected to the antenna module 110, as well as a second fixture 210B and ball joint 220B connected to the cable receiving pipe 230.

In more detail, as illustrated in FIGS. 21 to 23, the modified multifunction link 200' may include a center body 205, a first fixture 210A connected between one end of the center body 205 and the antenna module 110, a second fixture 210B connected between the other end of the center body 205 and the cable receiving pipe 230, a first ball joint 220A having one end partially accommodated and coupled to the internal space of the first fixture 210A and the other end connected to the antenna module 110 to control the directionality of the antenna module 110 by tilting or steering motion, and a second ball joint 220B having one end partially accommodated and coupled to the internal space of the second fixture 210B and the other end connected to the cable receiving pipe 230 that mediates the connection with the radio unit 120, thereby controlling the additional directionality of the antenna module 110.

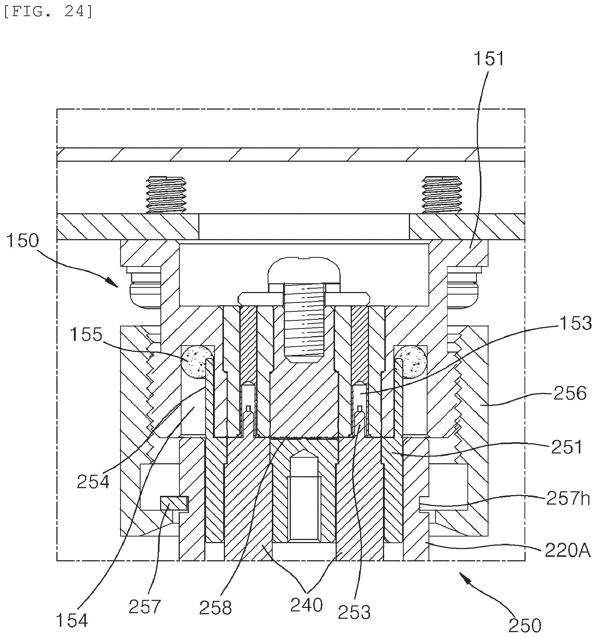

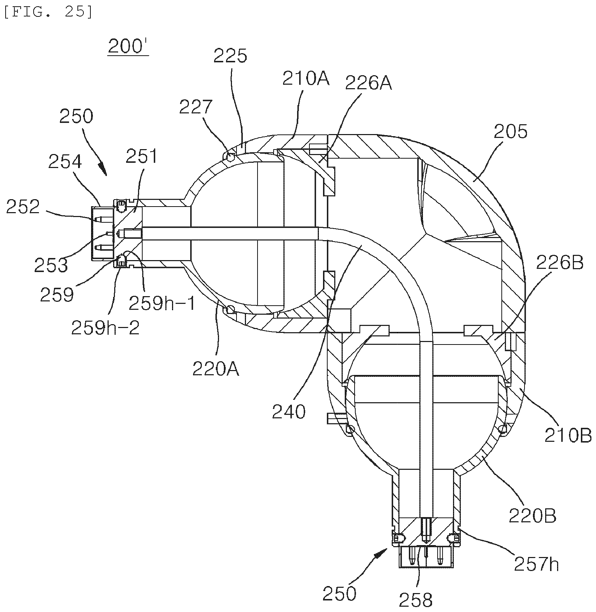

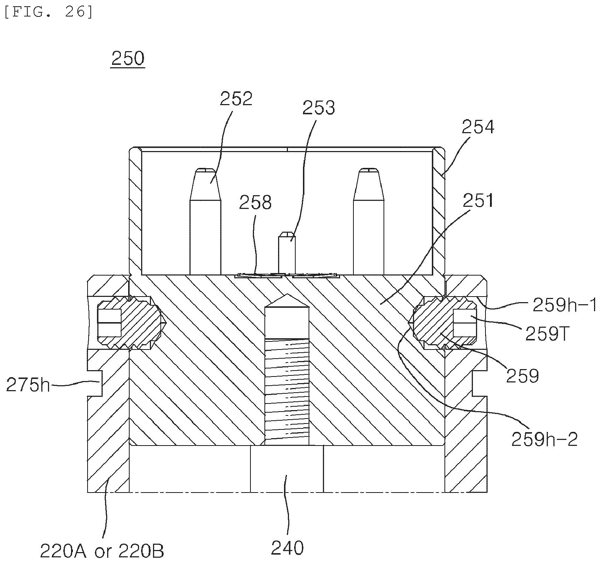

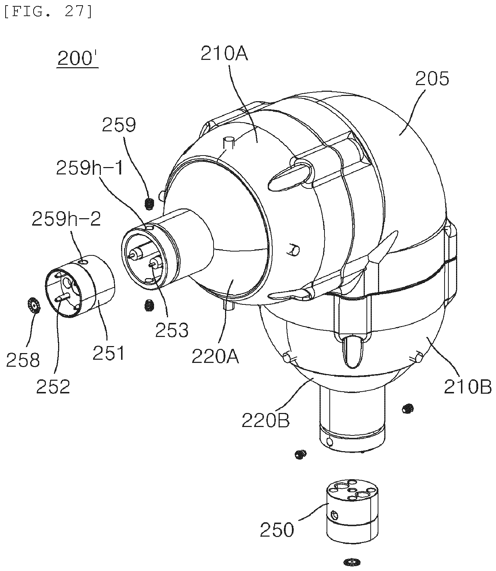

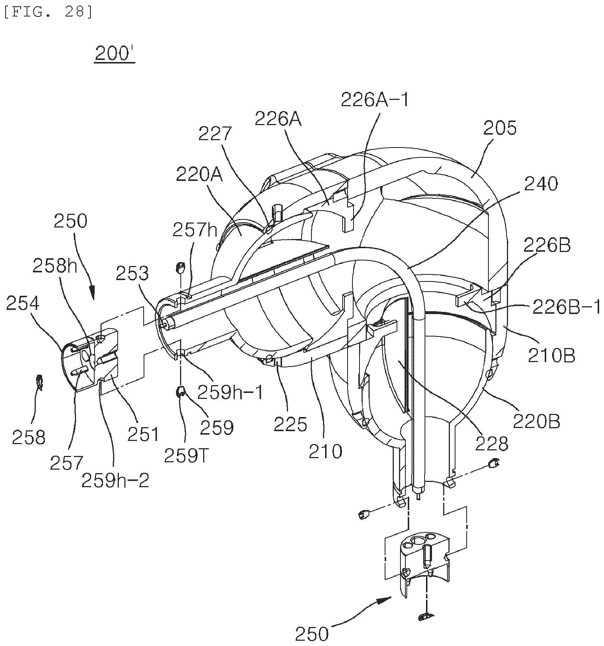

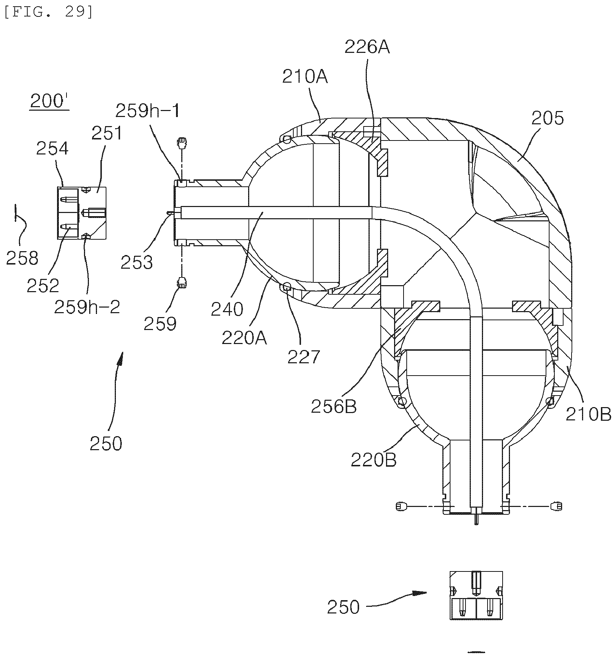

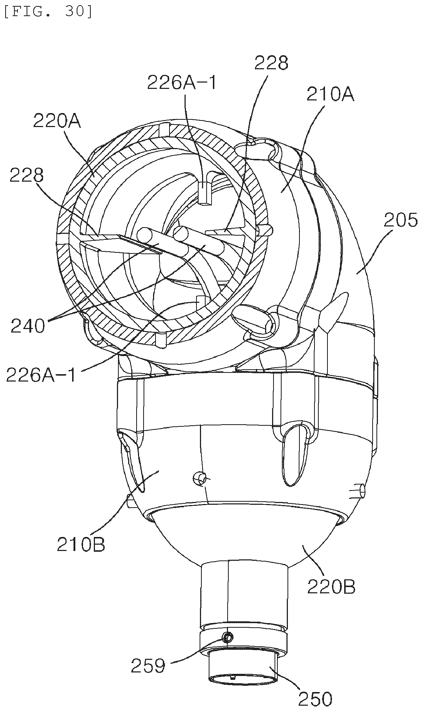

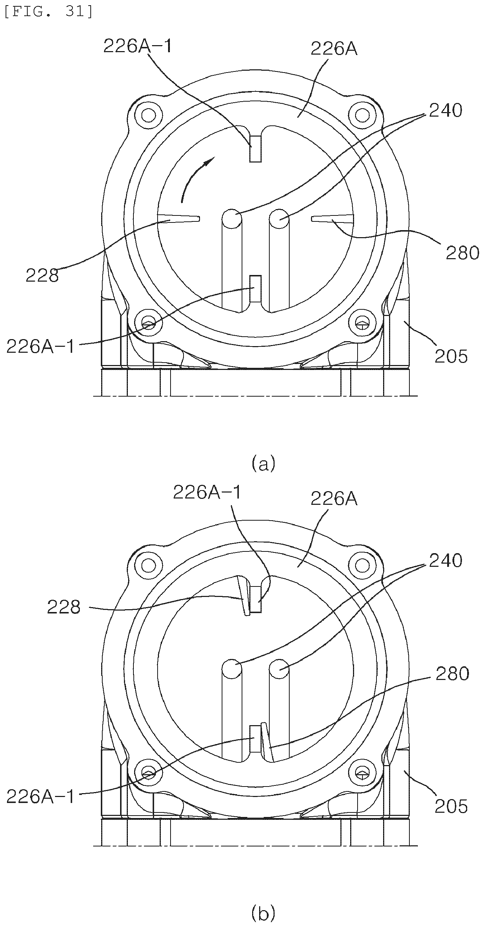

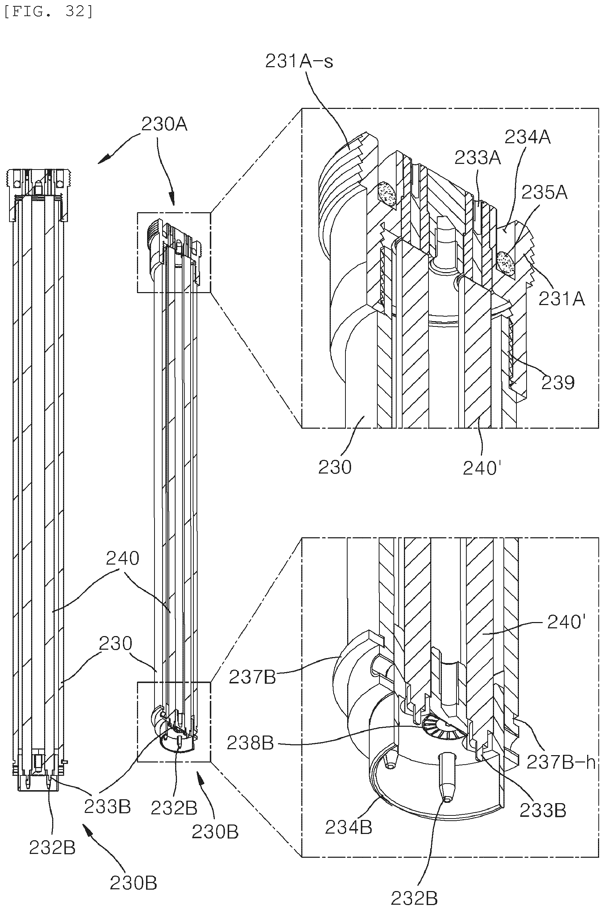

FIG. 24 is a cross-sectional view illustrating a portion of male-female coupling in the modified multifunction link of FIG. 21. FIG. 25 is a cross-sectional view illustrating the modified multifunction link of FIG. 21. FIG. 26 is a cross-sectional view illustrating a male connector of the modified multifunction link of FIG. 21. FIG. 27 is an exploded perspective view illustrating the modified multifunction link of FIG. 21. FIG. 28 is a cutaway perspective view of FIG. 27. FIG. 29 is a cross-sectional view of FIG. 27. FIG. 30 is a cutaway perspective view illustrating an over-rotation prevention latch referenced in FIGS. 27 to 29. FIG. 31 is an internal front view illustrating an operation of the over-rotation prevention latch of FIG. 30. FIG. 32 illustrates a cross-sectional view, a cutaway perspective view, and a partial enlarged view of a cable receiving pipe in the configuration of the modified multifunction link of FIG. 21.

As illustrated in FIG. 24, the male connector 250 provided at the end of the first ball joint 220A or second ball joint 220B of the modified multifunction link 200' may be coupled to the female connector 150 provided at the antenna module 110 or the radio unit 120 in a male-female coupling operation.

In more detail, as the guide ring 254 of the male connector 250 is accommodated into the ring receiving groove 154 formed on the female terminal block 151 of the female connector 150, it may come into contact with the foreign substance prevention ring 155 disposed inside the ring receiving groove 154 to perform waterproofing, and at the same time, the guide pin 252 and the terminal pin 253 of the male connector 250 may be inserted and electrically connected into the guide groove 152 and the terminal groove 153 of the female connector 150.

As illustrated in FIG. 24, a ground washer 258 may be further provided between the female connector 150 and the male connector 250.

The ground washer 258 may be fixed to the washer installation groove 258 (see FIG. 28) provided on the tip of the male terminal block 251 of the male connector 250 to perform a grounding (GND) function by inducing the contact between the male terminal block 251 of the male connector 250 and the female terminal block 151 of the female connector 150 during male-female coupling of the male connector 250 to the female connector 150.

In addition, the ground washer 258 is a component that performs the above-described ground GND function and also performs an electromagnetic interference (EMI) shielding function. In general, the coaxial cable 240 may be provided in the form of a washer that surrounds the periphery of the corresponding terminal pin 253, but the male connector 250 in the multifunction link 200 according to the present disclosure may be provided in the form of a single metal washer between the terminal pins 253, preferably at a central portion thereof. The ground washer 258 can prevent signal interference between the terminal pins 253 of the connector according to the present disclosure.

The male connector 250 may have a portion of the male terminal block 251 fixedly inserted into the front end side of the first ball joint 220A or the second ball joint 220B.

Here, the male connector 250 may be fixed via at least one headless bolt 259 so as not to rotate with respect to the first ball joint 220A or the second ball joint 220B.

More specifically, as shown in FIGS. 25 to 27, two bolt through holes 259h-1 may be formed at 180-degree intervals at a front end portion of the first ball joint 220A or the second ball joint 220B, and a bolt fastening hole 259h-2 to which the headless bolt 259 is fastened may be formed correspondingly on an outer circumferential surface of the male terminal block 251 of the male connector 250.

A tool groove 259T into which a front end of a fastening tool (not shown) having a quadrangular cross section is inserted may be formed on an outer surface of the headless bolt 259, and the male connector 250 may be easily fixed using the fastening tool through the tool groove 259T to prevent the headless bolt 259 from being exposed externally.

In this way, the male connector 250 may be fixedly inserted into the front end portion of the first ball joint 220A or the second ball joint 220B by the headless bolt 259 and is also caught in the rotational direction, thereby preventing random rotation of the male connector 250 with respect to the first ball joint 220A or the second ball joint 220B and preventing a change in coupling direction of the terminal pin 253 or the guide pin 252 to the" terminal groove 153 or the guide groove 152 of the female connector 150.

Meanwhile, an outer circumferential surface of the first ball joint 220A or the second ball joint 220B may be pre-assembled with the retainer nut 256 fitted therein in advance, and as described above, when the electrical connection of the male connector 250 to the female connector 150 is completed, the retainer nut 256 may be firmly fixed by being fastened to a male screw thread (no reference numeral) formed on an outer circumferential surface of the female terminal block 151 of the female connector 150.

In this case, a C-ring installation groove 257h may be formed on the outer circumferential surface of the first ball joint 220A or the second ball joint 220B, and when the C-ring 257 is fastened to the C-ring installation groove 257h, the rotational force is limited when the retainer nut 256 is fastened, thereby preventing damage to parts due to the over-assembly of the retainer nut 256.

As illustrated in FIGS. 28 to 31, the modified multifunction link 200' may further include an over-rotation prevention latch 226A that prevents over-rotation of the first ball joint 220A or the second ball joint 220B with respect to the first fixture 210A or the second fixture 210B.

The over-rotation prevention latch 226A has a pair of latching projections 226A-1, which are fixed to an internal space corresponding to between the first fixture 210A and the first ball joint 220A or between the second fixture 210B and the second ball joint 220B and protrude in a direction facing each other in the internal space. In other words, the over-rotation prevention latch 226A may have a pair of latching projections 226A-1 spaced apart from each other by approximately 180 degrees and extending toward the internal space by a predetermined length.

The first ball joint 220A or the second ball joint 220B may have a pair of latching plates 228 formed therein to extend toward the center body 205 for latching with the pair of latching projections 226A-1 at least within the radius of rotation.

As illustrated in FIG. 31, the pair of latching plates 228 of the first ball joint 220A or the second ball joint 220B are positioned so as to form an angle of rotation separation of 90 degrees with the pair of latching projections 226A-1 when no tilting or steering rotation motion is performed (see FIG. 31(a)). Therefore, when the first ball joint 220A or the second ball joint 220B is rotated in one direction or the other direction for the tilting or steering rotation motion, the angle of rotation in each direction may be limited to a maximum of 90 degrees.

This is to prevent the twisting of the plurality of coaxial cables 240 in the internal space due to excessive rotation of the first ball joint 220A or the second ball joint 220B.

Since the first ball joint 220A is connected to the female connector 150 of the antenna module 110 via the male connector 250 and the second ball joint 220B is connected to an upper end portion of the cable receiving pipe 230 disposed vertically via the male connector 250, theoretically, when the over-rotation prevention stopper 260A is not provided, left and right steering rotation angles of the antenna module 110 are 360 degrees and thus are not limited.

However, since the rotation angle of the second ball joint 220B with respect to the upper end portion of the cable receiving pipe 230 is limited to 90 degrees by the over-rotation prevention stopper 260A, the second ball joint 220B may be limited to rotate at only up to 90 degrees in addition to the physical maximum rotation limit angle (a) in one side and the other side directions of the second ball joint 220B, which will be described below. For example, when the maximum rotation limit angle (a) described below is 40 degrees, the maximum steering rotation angle of the antenna module 110 is limited to 130 degrees in one side or the other side direction.

Meanwhile, as shown in FIG. 32, the cable receiving pipe 230 among components of the modified multifunction link 200' may be defined as a concept in which the male connector 250 and a female connector 250C (see FIG. 32) are provided at each of both end portions thereof and the plurality of coaxial cables 240 connecting the male connector 250 to the female connector 250C are included.

Here, unlike the coaxial cables 240 installed inside the center body 205, the first fixture 210A, the second fixture 210B, the first ball joint 220A, and the second ball joint 220B and made of a flexible material to move in conjunction with the tilting or steering rotation motion of the antenna module 110, the plurality of coaxial cables 240 do not need to move inside the cable receiving pipe 230, and thus may be made of a rigid material or may be firmly fixed so as not to move inside the cable receiving pipe 230.

In addition, in order to distinguish the installation direction, an area joined with the male connector 250 of the second ball joint 220B may be provided at both end portions of the cable receiving pipe 230 in the form of the female connector 250C, and an area joined to the female connector 150 of the radio unit 120 may be provided in the form of the male connector 250.

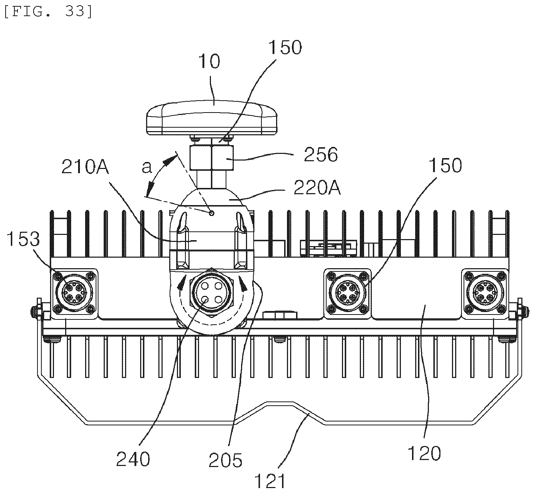

FIG. 33 is a projection plane diagram for explaining an effect of operation of the modified multifunction link of FIG. 21.

As shown in FIG. 33, the modified multifunction link 200' configured in this way increases the amount of the tilting or steering motion of the antenna module 110 compared to the general multifunction link 200, thereby enabling the additional directionality adjustment of the antenna module 110.

More specifically, generally, two strands of the coaxial cables 240 received in the cable receiving pipe 230 may be provided when the antenna module 110 constructs a 2T2R transmission channel, and four strands of the coaxial cables 240 may be provided when the antenna module 110 constructs a 4T4R transmission channel.

Here, according to the general multifunction link 200, when the cable receiving pipe 230 is fixed to the female connector 150 of the antenna module 110 using the male connector 250 and then the antenna module 110 is steered in the direction of the arrow (including both one side direction and the other side direction), the steering rotation motion is limited to the range of the maximum rotation angle (a) in the horizontal direction of the ball joint 220.

In particular, when two strands of the coaxial cables 240 are received in the cable receiving pipe 230, although not shown in the drawing, the terminal grooves 153 and terminal pins 253 in the female connector 150 and male connector 250 for electrical connection of the two strands of the coaxial cables 240 to the radio unit 120 are formed in a 3 o'clock direction and a 9 o'clock direction with respect to the ground, respectively, and thus it is not possible to adjust the directionality of the antenna module 110 through the steering motion at 90 degrees or more in one side direction or the other side direction. This is because connection directions of the two strands of the coaxial cables 240 to the female connector 150 of the radio unit 120 is preset to the 3 o'clock direction and the 9 o'clock direction.

For this reason, when the two strands of the coaxial cables 240 are provided, the directionality setting of the antenna module 110 at 90 degrees in the left-right direction with respect to a front surface of the radio unit 120 is not possible unless the above-described maximum horizontal rotation angle (a) in the horizontal direction is 90 degrees in a left direction or a right direction (which is not possible either when the female connector 150 and the male connector 250 are separated and then reassembled by changing a connection position of the terminal pin 253 to the terminal groove 153), and in order to enable this, the installation position of the terminal groove 153 of the female connector 150 joined to the radio unit 120 needs to be changed during reassembly, and even in this case, there is a limitation that the 90-degree directionality setting in either direction is not still possible.

However, such a limitation is reduced when the four strands of the coaxial cables 240 are received in the cable receiving pipe 230, and as shown in FIG. 33, this is because the terminal grooves 153 and the terminal pins 253 in the female connector 150 and the male connector 250 for electrical connection of each of the four strands of the coaxial cables 240 to the radio unit 120 are formed to be spaced apart from each other at 90 degrees in a circumferential direction at four locations. In this case, without the process of separating and reassembling the female connector 150 from the radio unit 120, it is possible to adjust the directionality at 90 degrees in the left-right direction with respect to the front surface of the radio unit 120 in a process of easily disconnecting the female connector 150 and the male connector 250 then re-connecting the female connector 150 and the male connector 250 to the terminal pins 253 and the terminal grooves 153 capable of the directionality design in a designer's desired direction.

In contrast, since the modified multifunction link 200' has the first fixture 210A and the first ball joint 220A and the second fixture 210B and the second ball joint 220B to be orthogonal to both end portions of the center body 205, even in the embodiment in which the two strands of the coaxial cables 240 are received in the cable receiving pipe 230, when the directionality of the antenna module 110 is adjusted by rotating the antenna module 110 in one side or the other side direction by the steering motion, the limitation of the maximum limit steering angle (a) by the second fixture 210B and the second ball joint 220B, which are provided to enable a 360-degree steering motion with respect to the vertical axis, among the two fixtures 210A and 210B and the two ball joints 220A and 220B is eliminated, thereby enabling directionality adjustment in all directions of 360 degrees without the process of separating and reassembling the female connector 150 from the radio unit 120. Of course, as described above, even when the rotation of the second ball joint 220B with respect to the second fixture 210B is limited to 90 degrees by the over-rotation prevention stopper 260A, the rotation limitation of the antenna module 110 in one side or the other direction extends 90 degrees in addition to the above-described maximum limit steering angle (a), and thus the same result can be derived.

That is, since the modified multifunction link 200' eliminates the limitation range of the steering motion of the antenna module 110 with respect to the radio unit 120 by adding the second fixture 210B and the second ball joint 220B, even when the directionality adjustment is newly set, the directionality of the antenna module 110 can be easily adjusted on site without the process of separating and reconnecting the female connector 150 from the radio unit 120.

For reference, even when the antenna module 110 tilts, the antenna module 100 may have a maximum tilting limit angle (a) (see FIG. 24) in the vertical direction, and thus the maximum tilting limit angle (a) of the antenna module 110 joined via the modified multifunction link 200' can increase to 2a, which is twice the angle (a), by having the two fixtures 210A and 210B and the two ball joint 220A and 220B at both end portions of the center body 205.

The small cell base station antenna apparatus 100 and the connector 150' for same according to the exemplary embodiments of the present disclosure have been described in detail above with reference to the accompanying drawings. However, the exemplary embodiments of the present disclosure should not be construed as limiting the disclosure. It will be apparent to those skilled in the art that the scope of the present disclosure is limited only by the appended claims and various variations and modifications may be made without departing from the spirit and scope of the disclosure. Therefore, the true scope of rights of the present disclosure should be defined by the appended claims.

### [Industrial Applicability]

The present disclosure is directed to a small cell base station antenna apparatus, which is capable of facilitating establishment of small cell base stations in public places, densely populated areas, or places such as large shopping malls or airport buildings, of preventing a poor aesthetic appearance (aesthetic external appearance) by having controllable directionality without exposure of various cables for electrical connection between a radio unit and an antenna module to the outside, and of achieving dual banding in various places by dividing a portion of one antenna module to cover different frequency bands or by providing a plurality of antenna modules to cover respective different frequency bands, and a connector for same.

## Claims

1. A small cell base station antenna apparatus comprising:
a radio Unit (RU);
at least one antenna module installed to be tiltable and steerable with respect to the radio unit; and
a multifunction link configured to mediate the installation of each antenna module to the radio unit, wherein the multifunction link comprises:
a center body;
a first fixture connected between one end of the center body and the antenna module; and
a second fixture connected between the other end of the center body and the radio unit, and
wherein the first fixture and the second fixture are coupled via a ball joint to enable the antenna module to be installed to perform tilting rotation and steering rotation motions with respect to the radio unit.

2. The small cell base station antenna apparatus according to claim 1, wherein the ball joint comprises:
a first ball joint having one end partially accommodated and coupled to an internal space of the first fixture and the other end connected to the antenna module to control directionality of the antenna module by tilting or steering motion; and
a second ball joint having one end partially accommodated and coupled to an internal space of the second fixture and the other end connected to a cable receiving pipe configured to mediate connection with the radio unit, thereby controlling additional directionality of the antenna module.

3. The small cell base station antenna apparatus according to claim 1, wherein the multifunction link is electrically connected to the antenna module and the radio unit via a connector.

4. The small cell base station antenna apparatus according to claim 3, wherein the connector comprises:
a male connector coupled to each tip of a plurality of coaxial cables accommodated in a concealed manner into the multifunction link; and
a female connector provided on each of the antenna module and the radio unit.

5. The small cell base station antenna apparatus according to claim 4, wherein when the female connector is provided on the radio unit, it comprises a coupling flange having an inner surface directly connected to an RF filter provided inside the radio unit, and a female terminal block having an outer surface connected to the male connector.

6. The small cell base station antenna apparatus according to claim 5, wherein the female connector is provided such that a number of through-pin terminals corresponding to the coaxial cables penetrate to connect the inner surface of the coupling flange and the outer surface of the female terminal block.

7. The small cell base station antenna apparatus according to claim 6, wherein:
the plurality of coaxial cables are equipped with either two strands for establishment of a 2T2R transmission line between the radio unit and the antenna module or four strands for establishment of a 4T4R transmission line between the radio unit and the antenna module;
the male connector has terminal pins formed corresponding to the number of coaxial cables; and
the female connector has terminal grooves formed corresponding to each other, the respective terminal pins being inserted and connected into the terminal grooves.

8. The small cell base station antenna apparatus according to claim 6, wherein the female connector is fastened directly to the RF filter using multiple screws while the coupling flange is in contact with the RF filter.

9. The small cell base station antenna apparatus according to claim 6, wherein each through-pin terminal of the female connector has a tip connected directly to a power supply connector provided on the RF filter.

10. The small cell base station antenna apparatus according to claim 7, wherein when the coaxial cables are equipped with four strands, the male connector further comprises a single ground washer at the center of terminal pins corresponding to the coaxial cables.

11. The small cell base station antenna apparatus according to claim 4, wherein:
the cable receiving pipe accommodates the plurality of coaxial cables to conceal them from the outside, and has one end connected to the radio unit and the other end connected to the second ball joint of the second fixture; and
the male connector is connected to each of one end and the other end of the coaxial cables.

12. The small cell base station antenna apparatus according to claim 11, wherein the male connector comprises: a male terminal block connected to each of one end and the other end of the coaxial cables;
a plurality of guide pins protruding from the male terminal block toward the female connector;
a plurality of terminal pins extending from the coaxial cables and protruding from the male terminal block toward the female connector; and
a retainer nut configured to maintain electrical connection force of the plurality of terminal pins to the female connector.

13. The small cell base station antenna apparatus according to claim 12, wherein the retainer nut is fastened to a nut fastening end provided on the female connector, thereby maintains the connection force.

14. The small cell base station antenna apparatus according to claim 1, wherein the antenna module is configured to:
have a plurality of antenna subarrays arranged to cover dual frequency bands on one antenna board; and
realize antenna beamforming in different frequency bands within the same direction of the antenna module set by the multifunction link.

15. The small cell base station antenna apparatus according to claim 1, wherein the antenna module is configured to:
have a plurality of antenna subarrays arranged to cover different frequency bands; and
have directionality set in different directions by the multifunction link.

16. The small cell base station antenna apparatus according to claim 1, wherein the antenna module is provided for a small cell base station.

17. The small cell base station antenna apparatus according to claim 1, the radio unit is installed on either a support pole, a wall, or a ceiling provided indoors.

18. The small cell base station antenna apparatus according to claim 2, wherein the first fixture and the second fixture are connected orthogonally to the center body.

19. The small cell base station antenna apparatus according to claim 2, wherein the multifunction link further comprises an over-rotation prevention latch configured to limit an angle of rotation direction of the first or second ball joint with respect to the first or second fixture.

20. The small cell base station antenna apparatus according to claim 2, wherein the over-rotation prevention latch has a pair of latching projections fixed to an internal space corresponding to between the first fixture and the first ball joint or between the second fixture and the second ball joint and protruding in a direction facing each other in the internal space, the pair of latching projections being latchable on a pair of latching plates extending toward the center body inside the first ball joint or the second ball joint.

21. The small cell base station antenna apparatus according to claim 20, wherein the pair of latching plates are positioned so as to form an angle of rotation separation of 90 degrees with the pair of latching projections when the antenna module does not perform the tilting rotation or steering rotation motion.

22. A connector for a small cell base station antenna apparatus comprising a radio unit (RU), at least one antenna module installed to be tiltable and steerable with respect to the radio unit, and a multifunction link configured to mediate the installation of each antenna module to the radio unit, the connector comprising:
a male connector coupled to each tip of a plurality of coaxial cables accommodated in a concealed manner into the multifunction link; and
a female connector comprising a coupling flange having an inner surface directly connected to an RF filter provided inside the radio unit and a female terminal block having an outer surface connected to the male connector.

23. The connector according to claim 22, wherein the female connector is provided such that a number of through-pin terminals corresponding to the coaxial cables penetrate to connect the inner surface and the outer surface.

24. The connector according to claim 23, wherein:
the plurality of coaxial cables are equipped with either two strands for establishment of a 2T2R transmission line between the radio unit and the antenna module or four strands for establishment of a 4T4R transmission line between the radio unit and the antenna module;
the male connector has terminal pins formed corresponding to the number of coaxial cables; and
the female connector has terminal grooves formed corresponding to each other, the respective terminal pins being inserted and connected into the terminal grooves.

25. The connector according to claim 23, wherein the female connector is fastened directly to the RF filter using multiple screws while the coupling flange is in contact with the RF filter.

26. The connector according to claim 23, wherein each through-pin terminal of the female connector has a tip connected directly to a power supply connector provided on the RF filter.

27. The connector according to claim 24, wherein when the coaxial cables are equipped with four strands, the male connector further comprises a single ground washer at the center of terminal pins corresponding to the coaxial cables.

28. The connector according to claim 22, wherein the multifunction link comprises:
a center body;
a first fixture connected between one end of the center body and the antenna module;
a second fixture connected between the other end of the center body and the radio unit;
a first ball joint having one end partially accommodated and coupled to an internal space of the first fixture and the other end connected to the antenna module to control directionality of the antenna module by tilting or steering motion; and
a second ball joint having one end partially accommodated and coupled to an internal space of the second fixture and the other end connected to a cable receiving pipe configured to mediate connection with the radio unit, thereby controlling additional directionality of the antenna module, in which case the female connector is provided such that a number of through-pin terminals corresponding to the coaxial cables accommodated in the cable receiving pipe penetrate to connect the inner surface and the outer surface.
